# EUROPÄISCHE PATENTANMELDUNG

(11) **EP 4 603 690 A1**
(43) Veröffentlichungstag der Anmeldung: **20.08.2025**
(21) Anmeldenummer: 25155532.2
(22) Anmeldetag: 03.02.2025
(51) Int. Cl.: F02C 7/232

(54) **VENTILEINHEIT ZUM STEUERN DER KRAFTSTOFFZUFUHR IN EINEM KRAFTSTOFFVERSORGUNGSSYSTEM, INSBESONDERE EINES FLUGZEUGS**

(30) Priorität: 14.02.2024 DE 102024201358
(71) Anmelder: Rolls-Royce Deutschland Ltd & Co KG, 15827 Blankenfelde-Mahlow (DE)
(72) Erfinder: GEBEL, Gregor Christoffer, 15827 Blankenfelde-Mahlow (DE); CLEMEN, Carsten, 15827 Blankenfelde-Mahlow (DE)

(57) **Zusammenfassung**

Die Erfindung bezieht sich auf eine Ventileinheit (100) mit einem in einem Gehäuse (101) angeordneten, insbesondere zylindrischen, Ventilraum (10), welcher mittels eines verstellbar und fluiddicht in dem Ventilraum (10) angeordneten Stellkörpers (11) in zwei fluiddicht voneinander getrennte, von Kraftstoff durchströmbare oder durchströmte Kammern, eine erste Kammer (10a) und eine zweite Kammer (10b), unterteilt ist, wobei
- der Ventilraum (10) einen ersten Einlass (8) zur Zuführung eines ersten Kraftstoffanteils, insbesondere Hauptkraftstoff, und einen zweiten Einlass (9) zur Zuführung eines zweiten Kraftstoffanteils, insbesondere Pilotkraft-stoff, aufweist,
- der Ventilraum (10) einen ersten Auslass (5), insbesondere zur Kraftstoff-Versorgung einer Triebwerks-Hauptstufe, und einen zweiten Auslass (6), insbesondere zur Kraftstoff-Versorgung einer Triebwerks-Pilotstufe, auf-weist,
- die Ventileinheit (100) ein in einer der Kammern (10a, 10b), insbesondere in der zweiten Kammer (10b), angeordnetes, mit dem Stellkörper (10) kraftüber-tragend gekoppeltes, elastisches Rückstellelement (12), insbesondere eine Federanordnung, aufweist, und
- die Ventileinheit (100) derart ausgebildet ist, dass eine Stellkraft zur Positionierung des Stellkörpers (11) innerhalb des Ventilraums (10) durch ein Zusammenwirken einer Rückstellkraft des Rückstellelements (12) mit einer zwischen den Kammern (10a, 10b) vorliegenden Druckdifferenz erzeugt wird, die zwischen den Kraftstoffdrücken innerhalb der Kammern (10a, 10b) resultiert, wodurch der Stellkörper (11) in eine den zweiten Auslass (6) versperrende Schließposition verstellbar ist.

Für eine zuverlässige Funktionsweise ist dabei vorgesehen, dass die zweite Kammer (106) mit einem weiteren Einlass (23) zur Zuführung eines weiteren Kraftstoffanteils und einem weiteren Auslass (24) versehen ist, über den Kraftstoff aus der zweiten Kammer (106) ableitbar ist und der geöffnet bleibt, wenn sich der Stellkörper (11) in der Schließposition des zweiten Auslasses (6) befindet (Fig. 3A).

## Beschreibung

Die Erfindung bezieht sich auf eine Ventileinheit mit einem in einem Gehäuse angeordneten, insbesondere zylindrischen, Ventilraum, welcher mittels eines verstellbar und fluiddicht in dem Ventilraum angeordneten Stellkörpers in zwei fluiddicht voneinander getrennte, von Kraftstoff durchströmbare oder durchströmte Kammern, eine erste Kammer und eine zweite Kammer, unterteilt ist, wobei der Ventilraum einen ersten Einlass zur Zuführung eines ersten Kraftstoffanteils, insbesondere Hauptkraftstoff, und einen zweiten Einlass zur Zuführung eines zweiten Kraftstoffanteils, insbesondere Pilotkraftstoff, aufweist, der Ventilraum einen ersten Auslass, insbesondere zur Kraftstoff-Versorgung einer Triebwerks-Hauptstufe, und einen zweiten Auslass, insbesondere zur Kraftstoff-Versorgung einer Triebwerks-Pilotstufe, aufweist, und die Ventileinheit ein in einer der Kammern, insbesondere in der zweiten Kammer, angeordnetes, mit dem Stellkörper kraftübertragend gekoppeltes, elastisches Rückstellelement, insbesondere eine Federanordnung, aufweist und die Ventileinheit derart ausgebildet ist, dass eine Stellkraft zur Positionierung des Stellkörpers innerhalb des Ventilraums durch ein Zusammenwirken einer Rückstellkraft des Rückstellelements mit einer zwischen den Kammern vorliegenden Druckdifferenz erzeugt wird, wobei die Druckdifferenz zwischen den Kraftstoffdrücken innerhalb der Kammern resultiert, wodurch der Stellkörper in eine den zweiten Auslass versperrende Schließposition verstellbar ist.

Eine Ventileinheit zum Steuern der Kraftstoffzufuhr für ein Triebwerk, insbesondere eine Gasturbinenanordnung eines Flugzeugs dieser Art ist in der nicht vorveröffentlichten deutschen Patentanmeldung Nr. 10 2023 203 281.3 der Anmelderin angegeben. Die Ventileinheit weist einen von einem Gehäuse umgebenen Ventilraum mit einem ersten und zweiten Einlass sowie einem ersten und zweiten Auslass auf, wobei in dem Ventilraum ein Stellkörper verschiebbar angeordnet ist, der den Ventilraum in eine erste und zweite Kammer unterteilt, welche von Kraftstoff durchströmbar bzw. durchströmt sind. Die Ventileinheit ist so in das Kraftstoffversorgungssystem eingebunden und so ausgebildet, dass über den ersten Einlass ein erster Kraftstoffanteil, insbesondere Hauptkraftstoff, und über den zweiten Einlass ein zweiter Kraftstoffanteil, insbesondere Pilotkraftstoff, zugeführt und über den ersten Auslass eine Kraftstoffversorgung insbesondere einer Triebwerks-Hauptstufe bzw. der Hauptstufe einer Kraftstoffdüse einer Gasturbinenbrennkammer, und über den zweiten Auslass eine Kraftstoffversorgung einer Triebwerks-Pilotstufe bzw. Pilotstufe der Kraftstoffdüse erfolgt. In einer der Kammern, insbesondere der zweiten Kammer, ist ein mit dem Stellkörper kraftübertragend gekoppeltes Rückstellelement, insbesondere eine Feder, angeordnet. Eine Stellkraft zur Positionierung des Stellkörpers innerhalb des Ventilraums wird durch ein Zusammenwirken der Rückstellkraft des Rückstellelements mit einer zwischen den beiden Kammern vorliegenden Druckdifferenz erzeugt, wobei die Druckdifferenz zwischen den Kraftstoffdrücken innerhalb der Kammern resultiert. Bei Untersuchungen der Erfinder hat sich gezeigt, dass das Verschließen der Pilotstufe auch das Einströmen von Kraftstoff in die für die Speisung der Pilotstufe zuständige Kammer instantan unterbindet, was auf einen unweigerlichen Effekt bei inkompressiblen, flüssigen Kraftstoffen zurückzuführen ist. Infolgedessen kann die Druckdifferenz zwischen der ersten und der zweiten Kammer, der Pilot- und Hauptkammer, bei höheren Betriebspunkten nicht weiter ansteigen, so dass der bewegliche Zylinder in einer metastabilen und schwer vorhersehbaren Position verbleibt. Im Betrieb kann es daher passieren, dass Druckschwankungen zwischen Pilot- und Hauptkammer zu einem Hin- und Herbewegen des Zylinders gerade an der Position führen, an der der zweite Auslass bzw. Pilotauslass verschlossen wird. Infolgedessen kann sich der Auslass immer wieder öffnen, so dass kurzfristig Kraftstoff auf die Pilotstufe gegeben wird. Dies steht einem ruhigen, schadstoffarmen und gut vorhersehbaren Betrieb der Brennkammer entgegen.

Eine weitere Ventileinheit zum Steuern der Kraftstoffzufuhr für eine Gasturbinenanordnung eines Flugzeugs ist in der US 11 215 121 B2 angegeben. Dabei ist an einem Gehäuse mit einem zylindrischen Ventilraum mindestens ein erster Einlass und Auslass zum Zuführen eines ersten Kraftstoffanteils bzw. Hauptkraftstoffs zu einer Düsenanordnung und mindestens ein zweiter Einlass und Auslass zur Zuführung eines zweiten Kraftstoffanteils bzw. Pilotkraftstoffs zu der Düsenanordnung vorgesehen, um ein definiertes Kraftstoff-Luft-Gemisch für die Verbrennung und den Betrieb einer Gasturbinenanordnung zu erzeugen. Dabei sind der zweite bzw. Pilotauslass und der zweite bzw. Piloteinlass an dem Gehäuse diametral zueinander positioniert. Zum Antrieb eines in dem Ventilraum verschiebbar angeordneten Stellkörpers ist z. B. vorgesehen, dass über eine elektrisch oder hydraulisch betriebene Pumpe Kraftstoff unter Druck gesetzt wird, um an einem Ende des Ventilraums eine Servoströmung zu erzeugen, die der Federkraft einer am anderen Ende des Ventilraums angeordneten Feder entgegenwirkt.

Weitere Ventileinheiten im Zusammenhang mit einer Gasturbinenanordnung sind in der US 6 058 694 A, dort zur Steuerung einer Schmiermittelzufuhr, und in der US 11 230 980 B2 gezeigt.

Die DE 10 2011 082 645 A1 zeigt eine Ventileinheit in einem Niederdruckkreislauf für ein Kraftstoffeinspritzsystem, insbesondere ein Common-Rail-Einspritzsystem, umfassend einen Kraftstofftank und eine Vorförderpumpe, mittels welcher Kraftstoff aus dem Kraftstofftank ansaugbar und über eine Kraftstoffleitung einer Hochdruckpumpe zuführbar ist. Die als 2/2-Wegeventil ausgebildete Ventileinheit ist in der Kraftstoffleitung angeordnet und bewirkt in Offenstellung eine hydraulische Verbindung eines Triebwerksraums mit einem Pumpenarbeitsraum der Hochdruckpumpe und ermöglicht in Schließstellung einen Nullförderbetrieb. Das 2/2-Wegeventil weist ein verschiebbares Ventilelement auf, das mit einer ersten Stirnfläche einen Steuerraum begrenzt, welcher über eine von der Kraftstoffleitung abzweigende weitere Leitung mit Kraftstoff versorgt wird. Die dem Steuerraum abgewandte zweite Stirnfläche des verschiebbaren Ventilelements wird von der Druckkraft einer Feder beaufschlagt, welche in einem Federraum aufgenommen ist. Der Federraum ist zur Abführung einer Leckagemenge über eine Rücklaufleitung an den Kraftstofftank angeschlossen. Im Federraum liegt im Wesentlichen der Rücklaufdruck vor. Die beiden durch den Stellkörper voneinander getrennten Kammern des Ventilraums und die an dem Ventilraum vorhandenen Einlässe und Auslässe sind dabei nicht so in ein Kraftstoffversorgungssystem eingebunden, dass eine Kraftstoffzuführung zu einer Kraftstoffdüse für den Einsatz in einer Gasturbinenbrennkammer erfolgt.

Der vorliegenden Erfindung liegt die Aufgabe zugrunde, eine Ventileinheit zur Versorgung einer Brennkammer über ein Kraftstoffversorgungssystem mit Kraftstoff bereitzustellen, die bei möglichst geringem Teileaufwand eine möglichst sichere Funktion des Kraftstoffversorgungssystems ergibt. Ferner soll ein mit einer solchen Ventileinheit aufgebautes Kraftstoffversorgungssystem und eine damit ausgestattete Gasturbinenanordnung angegeben werden.

Diese Aufgabe wird bei einer Ventileinheit mit den Merkmalen des Anspruchs 1 sowie bei einem Kraftstoffversorgungssystem mit den Merkmalen des Anspruchs 20 und bei einer Gasturbinenanordnung mit den Merkmalen des Anspruchs 22 erfindungsgemäß gelöst.

Bei der Ventileinheit ist im Zusammenhang mit den Merkmalen des Oberbegriffs weiterhin vorgesehen, dass die zweite Kammer mit einem weiteren Einlass zur Zuführung eines weiteren Kraftstoffanteils und einem weiteren Auslass versehen ist, über den Kraftstoff aus der zweiten Kammer ableitbar ist und der geöffnet bleibt, wenn sich der Stellkörper in der Schließposition des zweiten Auslasses befindet.

Aus einer Verteilerleitung (Manifold) über eine Vorkammer (Verteilungskammer) bereitgestellter Kraftstoff tritt über drei Leitungen, den Zylinderzuführungen mit dem zweiten und dem weiteren Eingang zur zweiten Kammer, insbesondere Pilotkammer, mit einem Druckverlust DPP = P0-PP, der z. B. über ein Druckregulierungsmittel (Restriktor) erzeugt wird, und über eine Zylinderzuführung mit dem ersten Eingang zur ersten Kammer (Hauptkammer), mit einem Druckverlust DPH=P0-PH, ebenfalls z. B. über ein Druckregulierungsmittel (Restritkor) eingestellt, in den Ventilraum ein. Dabei ist der Druckverlust bei Eintritt in den Ventilraum auf der Seite der zweiten Kammer bzw. Pilotkammer größer als der auf der Seite der ersten Kammer bzw. Hauptkammer, wobei verwendete Druckregulierungsmittel entsprechend ausgelegt sind: DPP>DPH ergibt PP<PH. Der in der ersten und der zweiten Kammer (Hauptkammer und Pilotkammer) herrschende individuelle Druck PH bzw. PP ist gegenüber dem in der Verteilerleitung herrschenden Druck P0 durch die in den jeweiligen Zuführungen herrschenden Bedingungen, insbesondere integrierten Druckregulierungsmittel, reduziert. Es gilt somit PP<PH. Der Kraftstoff kann aus den beiden Kammern durch die Auslässe - den ersten, den zweiten und den weiteren Auslass - austreten und so die Kraftstoffdüse mit Kraftstoff versorgen.

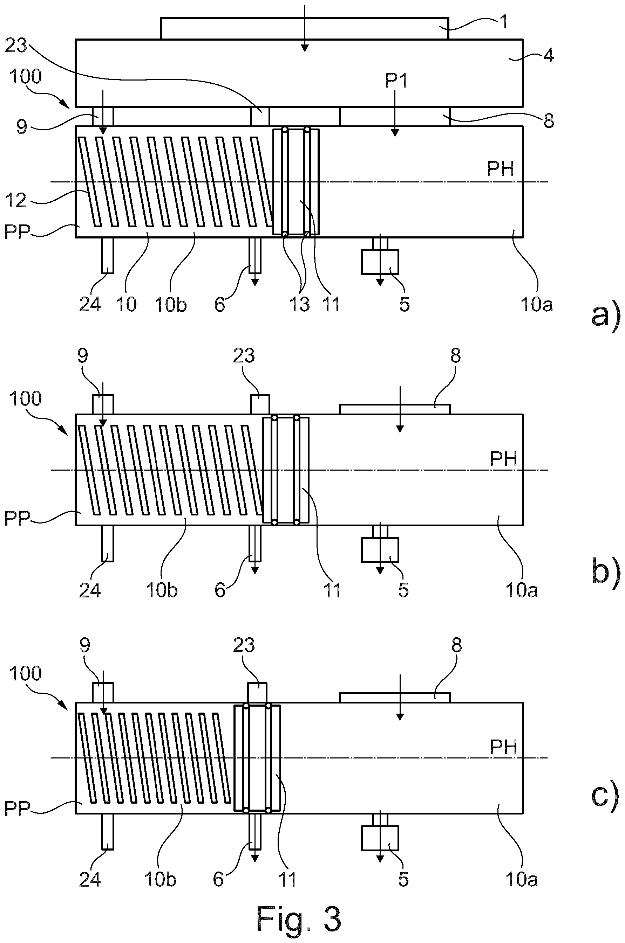

Die grundsätzliche Funktionsweise der so gestalteten Ventileinheit ist prinzipiell wie anhand der Fig. 3a) bis c) weiter unten näher erläutert. Mittels der genannten Maßnahmen kann eine plötzliche Änderung des Drucks in der zweiten Kammer bzw. Pilotkammer weitgehend, bei entsprechender Dimensionierung der Zuleitung zu dem betreffenden Einlass der zweiten Kammer mit dem gegebenenfalls vorhandenen Druckregulierungsmittel und der Ableitung an dem weiteren Auslass der zweiten Kammer praktisch vollständig vermieden werden. Dies trägt zu einem ruhigen, schadstoffarmen und gut vorhersehbaren Betrieb der Brennkammer wesentlich bei.

Eine vorteilhafte Ausgestaltung der Ventileinheit in Abstimmung auf das Kraftstoffversorgungssystem besteht darin, dass der weitere Auslass zur Versorgung der Triebwerks-Hauptstufe mit Kraftstoff ausgebildet ist, insbesondere durch Anschluss an den ersten Auslass in dessen stromabseitigem Bereich. Wird der zweite Auslass der zweiten Kammer geschlossen, so wird über den betreffenden Einlass der zweiten Kammer und das gegebenenfalls zugeordnete Druckregulierungsmittel eintretender Kraftstoff über den weiteren Auslass der Triebwerks-Hauptstufe zugeführt und somit einer plötzlichen Änderung des Drucks in der zweiten Kammer entgegengewirkt. Insbesondere wird eine plötzliche Änderung des Drucks vermieden, wenn die betreffende Zuleitung zu der zweiten Kammer und die Ableitung über den weiteren Auslass so dimensioniert sind, dass mit dem Wegfall (oder Hinzukommen) des anderen Massenstrompfades (insbesondere über die Zuleitung zu dem weiteren Einlass der zweiten Kammer) in dem betreffenden Austritt (insbesondere dem zweiten Auslass der zweiten Kammer) keine plötzliche Änderung des Druckes in der zweiten Kammer stattfindet.

Eine sichere Funktionsweise der Ventileinheit wird dadurch erreicht, dass der weitere Einlass an der zweiten Kammer axial in entsprechender Position wie der zweite Auslass angeordnet ist, so dass er ebenfalls durch den Stellkörper versperrt ist, wenn sich dieser in der Schließposition des zweiten Auslasses befindet. Der zweite Einlass ist gegenüber dem zweiten Auslass in Richtung des festen Endes des Ventilraums auf der Seite der zweiten Kammer axial versetzt, wobei sich der zweite Einlass und der zweite Auslass vorteilhaft (aber nicht notwendigerweise) diametral gegenüberliegen.

Zur genauen Abstimmung der in dem Ventilraum bzw. der ersten und zweiten Kammer vorliegenden Druckverhältnisse und für eine sichere und präzise Funktion ist vorteilhaft vorgesehen, dass der Ventileinheit zumindest ein Druckregulierungsmittel zugeordnet ist, das zur Einstellung eines Druckverhältnisses zwischen der ersten Kammer und der zweiten Kammer, vorzugsweise stromauf des Ventilraums, zur Erzeugung eines definierten Kraftstoff-Verhältnisses zwischen dem ersten Kraftstoff und zweiten Kraftstoff angeordnet ist, wobei vorzugsweise in der zweiten Kammer ein geringerer Druck als in der ersten Kammer erzeugbar oder erzeugt ist.

Eine vorteilhafte Abstimmung der Druckverhältnisse lässt sich dabei dadurch erreichen, dass sowohl dem ersten Einlass als auch dem zweiten Einlass und/oder weiteren Einlass ein Druckregulierungsmittel zugeordnet ist, wobei im Falle, dass dem zweiten Einlass und dem weiteren Einlass ein Druckregulierungsmittel zugeordnet ist, dem zweiten Einlass und dem weiteren Einlass jeweils ein oder diesen beiden Einlässen über einen Y-Anschluss ein gemeinsames Druckregulierungsmittel zugeordnet ist.

Eine einfache, wenig störanfällige Ausbildung besteht dabei darin, dass das zumindest eine Druckregulierungsmittel als im Betrieb unverstellbares, passives Strömungselement, insbesondere aufweisend eine Verengung des Strömungsquerschnitts, ausgebildet ist.

Für eine zuverlässige Funktion im regulären Betrieb und/oder im Versagensfall bzw. für eine zuverlässige Ausfallsicherung besteht eine weitere vorteilhafte Ausgestaltung darin, dass die Ventileinheit eine reguläre Konfiguration und/oder eine Fehlerkonfiguration einnehmen kann, wobei
- in der regulären Konfiguration der Stellkörper innerhalb des Ventilraums derart angeordnet ist, dass im Betrieb in einem ersten Stellmodus der erste Einlass, und nicht der zweite Einlass, durch die erste Kammer mit dem ersten Auslass in Strömungsverbindung steht und/oder dass der zweite Einlass und der weitere Einlass, und nicht der erste Einlass, durch die zweite Kammer mit dem zweiten Auslass und dem weiteren Auslass in Strömungsverbindung stehen und in einem zweiten Stellmodus zumindest der zweite Auslass mittels des Stellkörpers undurchströmbar versperrt ist, sodass keine Durchströmung des zweiten Auslasses, jedoch weiterhin eine Durchströmung der zweiten Kammer über den weiteren Auslass stattfindet und/oder
- in der Fehlerkonfiguration der Stellkörper innerhalb des Ventilraums derart neben den Auslässen angeordnet ist, dass im Betrieb beide, der erste und der zweite Auslass, mit zumindest einem gleichen Einlass zur Kraftstoffversorgung in Strömungsverbindung stehen. und der weitere Auslass zumindest mit dem zweiten Einlass in Strömungsverbindung steht.

Vorteilhafte Vorkehrungen für einen sicheren Betrieb einer Gasturbine, insbesondere bei einem Flugtriebwerk, bestehen darin, dass das Rückstellelement derart ausgelegt ist, dass in der regulären Konfiguration sich der erste Stellmodus ohne Druckdifferenz, z. B. bei ausgeschaltetem Triebwerk, und/oder bei geringer Druckdifferenz zwischen den Kammern, z. B. in einem Niederlastbereich eines Triebwerks, einstellt und/oder sich der zweite Stellmodus bei höherer Druckdifferenz als die geringe Druckdifferenz, z. B. in einem Mittel- und/oder Hochlastbereich, einstellt.

Bei Niederlast, wie z. B. einem Triebwerkstart oder in einem Leerlauf des Triebwerks ist dabei die Versorgung mit dem Pilotkraftstoff gewährleistet, während bei Hochlast, wie z. B. bei einem Reiseflug oder in einer Startphase, eine Versorgung mit Pilotkraftstoff ausgeschaltet ist.

Für einen Versagensfall ist vorteilhaft vorgesehen, dass in der Fehlerkonfiguration in einer ersten Fehlerstellung der Stellkörper im Vergleich zu der regulären Konfiguration weiter in Richtung des Rückstellelements, insbesondere unter Verkleinerung der zweiten Kammer, positioniert ist. Diese Fehlerstellung wird im Versagensfall der Feder eingenommen, insbesondere beim Verlust der Federkraft bzw. wenn die Feder vollständig zusammengeschoben ist.

Eine sichere Funktion im Versagensfall wird des Weiteren dadurch erreicht, dass in der Fehlerkonfiguration in einer zweiten Fehlerstellung der Stellkörper im Vergleich zu der regulären Konfiguration derart weiter in Richtung eines dem Rückstellelement gegenüberliegenden Endes des Ventilraums positioniert ist, insbesondere unter Verkleinerung der ersten Kammer, dass der erste Einlass mit der zweiten Kammer in Strömungsverbindung steht. Ein solcher Versagensfall liegt insbesondere dann vor, wenn die Feder bricht und eine Druckdifferenz bezüglich der beiden Stirnflächen des Stellkörpers (also dessen der ersten Kammer und der zweiten Kammer zugewandter Seite) Null ist bzw. wenn das Triebwerk ausgeschaltet ist. Der Stellkörper unterliegt dann einer freien Bewegung, hier unter Verkleinerung der ersten Kammer.

Somit sorgt bei der genannten Ausbildung die Fehlerkonfiguration bzw. das Notfallszenario dafür, dass die Pilotversorgung mit Kraftstoff vom Leerlauf bis in den Hochlastbetrieb mit Kraftstoff sichergestellt ist. Leerlauf bedeutet vorliegend die Drehzahl, in der das Triebwerk sich zwar eigenständig dreht, aber keinen bzw. kaum Schub erzeugt.

Eine für den Aufbau und die Funktion vorteilhafte Ausgestaltung der Ventileinheit besteht darin, dass der Ventilraum länglich, insbesondere zylindrisch, ausgebildet ist und/oder über seine Länge einen konstanten Querschnitt oder Abschnitte unterschiedlicher Querschnitte aufweist, wobei der Querschnitt innerhalb der Abschnitte konstant ist, und dass der Stellkörper in dem Ventilraum in Längsrichtung axial verschiebbar angeordnet ist, wobei der Stellkörper, insbesondere einen korrespondierenden Querschnitt zu dem Ventilraum aufweist, um mit den Innenwänden des Ventilraums, vorzugsweise unter Zwischenordnung zumindest eines Dichtmittels, fluiddichtend in Kontakt zu stehen.

Zu einer präzisen Funktion der Ventileinheit und für weitere Sicherungsmaßnahmen ist des Weiteren vorteilhaft vorgesehen, dass an dem Ventilraum, insbesondere an der nicht das Rückstellelement beinhaltenden Kammer, eine Auffangkammer zur Aufnahme von Bruchstücken von in dem Ventilraum vorhandenen Elementen, insbesondere des Stellkörpers und/oder des Rückstellelements, angeordnet ist, wobei in der Auffangkammer ein Halteelement, insbesondere ein Magnet, angeordnet ist.

Zu einer verbesserten Funktion des Rückstellelements und einer genauen Positionierung des Stellkörpers trägt bei, dass zusätzlich zu dem Rückstellelement ein zweites elastisches Element, insbesondere eine Stützfeder, auf der Seite des Rückstellelements angeordnet ist, das kürzer ausgebildet ist als das Rückstellelement und zum Zusammenwirken mit dem Rückstellelement, insbesondere bei Hochlastbedingungen, ausgebildet ist und z. B. eine geringere Elastizität aufweist als das Rückstellelement, um dessen Rückstellkraft zu unterstützen, oder dass als Rückstellelement eine Feder mit über den Federweg nichtlinearer Rückstellkraft eingesetzt ist.

Zu einer definierten Positionierung des Stellkörpers trägt bei, dass innerhalb des Ventilraums, insbesondere in der ersten Kammer, zumindest ein Anschlagelement angeordnet ist, welches die Bewegung des Stellkörpers durch das Rückstellelement an einer Nullposition begrenzt.

Für eine präzise Funktion und genaue Einstellung des Stellkörpers sowie einen kompakten, kurzen Aufbau ist die Ausgestaltung von Vorteil, dass der Ventilraum Abschnitte unterschiedlicher Querschnitte aufweist, wobei in dem Ventilraum seitens der ersten Kammer eine sich an die erste Kammer in axialer Richtung anschließende erste Zusatzkammer geringeren Querschnitts und/oder seitens der zweiten Kammer eine sich in entgegengesetzter axialer Richtung anschließende zweite Zusatzkammer geringeren Querschnitts ausgebildet sind, und dass der in dem Ventilraum verschiebliche Stellkörper Abschnitte mit zu der ersten und zweiten Kammer und der ersten und/oder zweiten Zusatzkammer korrespondierendem dickeren und dünneren Querschnitt aufweist.

Vorteilhafte weitere Maßnahmen für die Funktion bestehen dabei darin, dass bei Vorhandensein der ersten und zweiten Zusatzkammer der betreffende erste bzw. zweite Einlass an der jeweiligen Zusatzkammer und der weitere Einlass an der zweiten Kammer, der erste Auslass an der ersten Zusatzkammer, und der zweite Auslass an der zweiten Kammer und der weitere Auslass an der zweiten Zusatzkammer angeordnet sind und dass bei Ausbildung ohne die erste Zusatzkammer der erste Einlass und der erste Auslass an der ersten Kammer, der zweite Einlass an der zweiten Zusatzkammer, der weitere Einlass an der zweiten Kammer, der zweite Auslass an der zweiten Kammer und der weitere Auslass an der zweiten Zusatzkammer angeordnet sind.

Zu einer präzisen, zuverlässigen Funktion tragen des Weiteren die Maßnahmen bei, dass parallel zu dem Ventilraum mindestens eine Bypassleitung vorhanden ist, die so angeordnet ist/sind, dass bei bestimmten Positionen des Stellkörpers in dem Ventilraum die beiden Stirnflächen des dickeren Abschnitts auf beiden Seiten dem gleichen Druck ausgesetzt sind.

Der Aufbau und die Funktion werden dabei des Weiteren dadurch begünstigt, dass bei Vorhandensein der ersten Zusatzkammer und dem dazu korrespondierenden Abschnitt dünneren Querschnitts des Stellkörpers in diesem Abschnitt eine Kanalanordnung ausgebildet ist, um einen Einlassbereich der ersten Zusatzkammer mit der ersten Kammer über die zugeordnete Bypassleitung fluidleitend zu verbinden.

Weitere vorteilhafte Maßnahmen für die Funktion und eine genaue Steuerung des Kraftstoffflusses bestehen darin, dass zumindest einer der Übergänge aus dem Ventilraum in den ersten oder den zweiten Auslass zu einem anschließenden Leitungsabschnitt hin trichterförmig verjüngt ist oder einen die Aufteilung des Kraftstoffstroms zwischen dem Pilotkraftstoff und dem Hauptkraftstoff definiert beeinflussenden Querschnitt aufweist.

Vorteile bei der Kraftstoffzuführung werden ferner durch ein Kraftstoffversorgungssystem zur Versorgung einer Gasturbinenanordnung, insbesondere eines Flugzeugs, mit Kraftstoff, umfassend eine Ventileinheit nach einem der Ansprüche 1 bis 19, erhalten.

Zu einer vorteilhaften Zuführung des Kraftstoffs zu einer Brennkammeranordnung ist ein Kraftstoffversorgungssystem von Vorteil, das dadurch gekennzeichnet ist, dass eine einzelne Ventileinheit zur Versorgung mehrerer Hauptstufen und/oder Pilotstufen mit Kraftstoff ausgebildet ist, wobei stromab der Ventileinheit in einer Hauptleitung und/oder in einer Pilotleitung, ggf. jeweils, ein Zweigabschnitt angeordnet ist.

Eine vorteilhafte Betriebsweise ergibt sich ferner für eine Gasturbinenanordnung mit einer Brennkammeranordnung und einem Kraftstoffversorgungssystem umfassend zumindest eine Ventileinheit nach einem der Ansprüche 1 bis 19 und eine Turbinenanordnung.

Weitere Vorteile werden erhalten für ein Verfahren zum Betreiben eines Kraftstoffversorgungssystems einer Gasturbinenanordnung, insbesondere eines Triebwerks für ein Flugzeug, bei dem eine Ventileinheit nach einem der Ansprüche 1 bis 19 verwendet wird.

Die Erfindung wird nachfolgend anhand von Ausführungsbeispielen unter Bezugnahme auf die Zeichnungen näher erläutert. Es zeigen:
- Fig. 1: in Teilbildern a), b) und c) schematisch dargestellt ausschnittsweise ein Kraftstoffversorgungssystem mit einer an eine Verteilerleitung (Manifold) und eine Vorkammer (Verteilungskammer) angeschlossenen, eine Ventileinheit aufweisenden Kraftstoffzuführung zu einer Kraftstoffdüse, die an eine in einem Brennkammergehäuse befindliche Brennkammer angeschlossen ist, in verschiedenen Anordnungsvarianten nach dem Stand der Technik,
- Fig. 2A: in schematischer Darstellung eine an eine über eine Vorkammer an eine Verteilerleitung angeschlossene Ventileinheit zur Kraftstoffzuführung zu einer Kraftstoffdüse nach dem Stand der Technik,
- Fig. 2B: in schematischer Darstellung ein Ausführungsbeispiel einer mit Einlässen und Auslässen für die Kraftstoffversorgung versehenen Ventileinheit nach dem Stand der Technik,
- Fig. 3: in Teilbildern a), b) und c) schematisch dargestellt die bei Einbindung in eine Kraftstoffzuführung zu einer Kraftstoffdüse vorliegende grundsätzliche Funktionsweise einer Ventileinheit in erfindungsgemäßer Ausbildung bei drei verschiedenen Druckzuständen, wie z. B. bei unterschiedlichen Betriebszuständen eines Triebwerks,
- Fig. 4: in Teilbildern a) und b) in schematischer Darstellung eine Ventileinheit gemäß Fig. 3 in zwei verschiedenen Versagensfällen eines Rückstellelements in Form einer Feder der Ventileinheit,
- Fig. 5: in schematischer Darstellung ein Diagramm zum Verlauf verschiedener Drücke im Bereich der Ventileinheit in Abhängigkeit von Betriebszuständen eines Triebwerks,
- Fig. 6A bis 6G: eine schematische Darstellung einer Ausgestaltungsvariante einer erfindungsgemäßen Ventileinheit bei verschiedenen Betriebszuständen mit detaillierterer Wiedergabe funktionswesentlicher Ventilkomponenten,
- Fig. 7: ein weiteres Ausführungsbeispiel einer erfindungsgemäßen Ventileinheit mit detaillierterer Wiedergabe funktionswesentlicher Komponenten,
- Fig. 8: eine weitere Ausführungsvariante einer erfindungsgemäßen Ventileinheit mit detaillierterer Wiedergabe funktionswesentlicher Ventilkomponenten und
- Fig. 9: ein weiteres Ausführungsbeispiel einer erfindungsgemäßen Ventileinheit mit detaillierterer Wiedergabe funktionswesentlicher Ventilkomponenten.

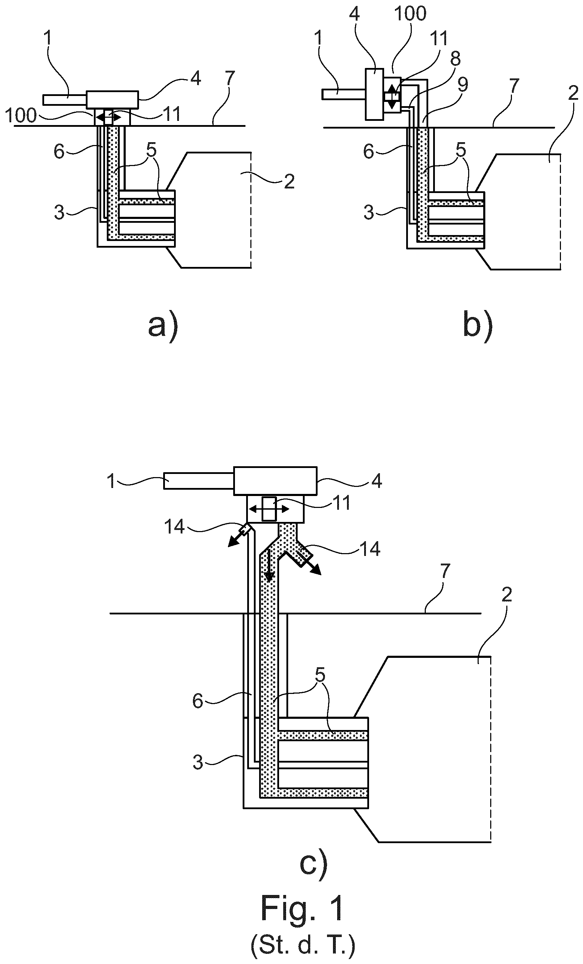

Wie die Fig. 1 in Teilbildern a), b) und c) beispielhaft zeigt und auch in der eingangs genannten deutschen Patentanmeldung Nr. 10 2023 203 281.3 beschrieben, kann ein Kraftstoffversorgungssystem einer Brennkammer 2 bzw. einer an dieser eingangsseitig angeordneten Kraftstoffdüse 3, beispielsweise eines Flugzeugtriebwerks, in verschiedener Anordnung bzw. Einbaulage mit einer zwischen einer Verteilerleitung 1 (Manifold) mit anschließender Vorkammer 4 (Verteilungskammer) und einer nachgeordneten Kraftstoffdüse 3 angeordneten Kraftstoffzuführung umfassend eine Ventileinheit 100 ausgestaltet sein. Beispielhaft zeigen die Teilbilder a) und b) zwei unterschiedliche Ausrichtungen einer Ventileinheit 100 im Bezug auf ein Brennkammergehäuse 7, wobei die Ventileinheit 100 z. B. an dem Brennkammergehäuse 7 bzw. der Kraftstoffdüse 3 oder in geringem Abstand (radial) oberhalb an oder neben dem Brennkammergehäuse 7 bzw. der Kraftstoffdüse 3 in z. B. waagerechter oder senkrechter Ausrichtung bezüglich der Brennkammerwand angebracht sein kann. In dem Teilbild c) ist die Kraftstoffzuführung schematisch in einer Anordnung gezeigt, bei der eine Ventileinheit 100 zur Versorgung mehrerer Kraftstoffdüsen 3 dient. Die Versorgung erfolgt dabei über einen Zweigabschnitt 14, vorliegend ein Y-Stück, welches die Kraftstoffströme gleichmäßig auf in diesem Fall zwei Kraftstoffdüsen 3 aufteilt. In der Ventileinheit 100 ist ein Stellkörper 11 verschieblich angeordnet.

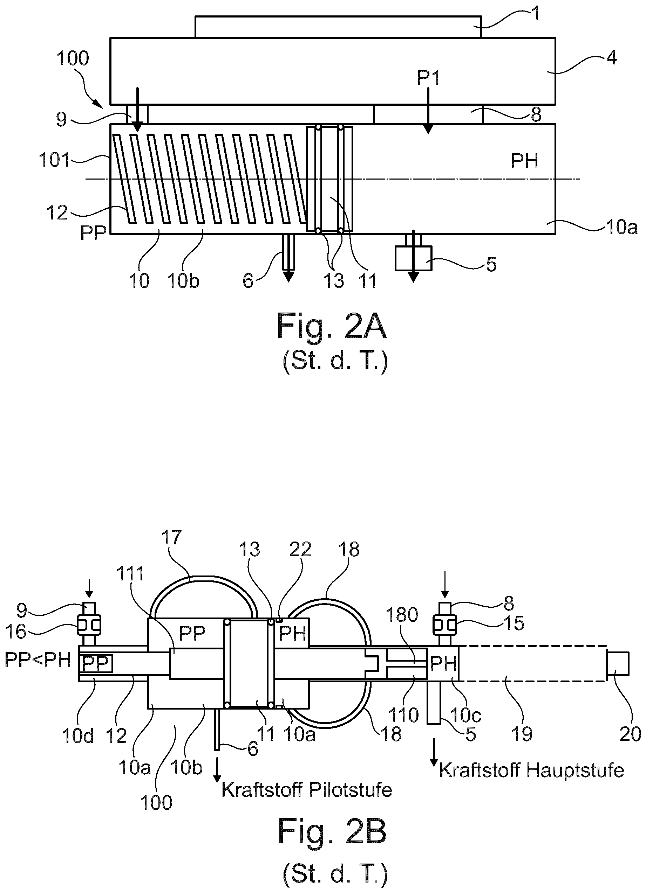

Die Fig. 2A und 2B zeigen bei einer solchen Kraftstoffzuführung eines Kraftstoffversorgungssystems für eine Brennkammer 2 eingesetzte Ventileinheiten 100 nach dem Stand der Technik, wie er in der eingangs genannten (nicht vorveröffentlichten) deutschen Patentanmeldung Nr. 10 2023 203 281.3 angegeben ist, für ein vereinfacht (Fig. 2A) und für ein detaillierter wiedergegebenes Ausführungsbeispiel (Fig. 2B) in schematischer Darstellung. Nähere Ausführungen zur Einbindung und zur Funktionsweise einer derartigen Ventileinheit 100 in Verbindung mit der Kraftstoffzuführung zu einer Kraftstoffdüse 3 und anschließender Brennkammer 2 sind ebenfalls in der genannten deutschen Patentanmeldung Nr. 10 2023 203 281.3 gemacht, auf die hier insoweit ergänzend hingewiesen sei.

Die in Fig. 2A dargestellte Ventileinheit 100 weist ein Gehäuse 101 auf, in dem ein, insbesondere zylindrisch geformter, Ventilraum 10 ausgebildet ist. Das Gehäuse 101 ist eingangsseitig mit einem ersten Einlass 8 für den Anschluss einer einen (ersten) Kraftstoffanteil zuführenden ersten Zuführleitung, insbesondere Haupt-Zuführleitung, und einem zweiten Einlass 9 für den Anschluss einer einen (zweiten) Kraftstoffanteil zuführenden zweiten Zuführleitung, insbesondere Pilot-Zuführleitung, versehen und über diese an die Vorkammer 4 angeschlossen, der über die Verteilerleitung 1 (Manifold) Kraftstoff aus einem (nicht gezeigten) Tank zugeführt wird. Ausgangsseitig ist das Gehäuse 101 mit einem ersten Auslass 5 zum Anschluss an eine ausgangsseitige erste Anschlussleitung, insbesondere Hauptleitung, und mit einem zweiten Auslass 6 zum Anschluss an eine ausgangsseitige zweite Anschlussleitung, insbesondere Pilotleitung, versehen. Über den ersten und zweiten Auslass 5, 6 und die erste und zweite Ausschlussleitung erfolgt die Kraftstoffzuführung zu den betreffenden Stufen der Kraftstoffdüse 3, insbesondere eine Hauptstufe bzw. Pilotstufe. Der zweite Auslass 6 ist gegenüber dem näher an dem einen (vorliegend linken) Ende des Ventilraums 10 gelegenen zweiten Einlass 9 axial nach innen (zur Mitte des Ventilraums 10 hin) versetzt, liegt also nicht in derselben zur Längsachse senkrechten Querschnittsebene wie der zweite Einlass 9. Der erste Auslass 5 ist bei vorliegendem Ausführungsbeispiel dem ersten Einlass 8 in etwa gegenüberliegend angeordnet.

Im Unterschied zu dem (mehr prinzipiell) in Fig. 2A gezeigtem Ausführungsbeispiel der Ventileinheit 100 ist der Ventilraum 10 bei dem detaillierter dargestelltem Ausführungsbeispiel nach Fig. 2B an seinen beiden Enden in einer jeweiligen rechtwinklig zu der längs verlaufenden Ventilraumachse liegenden Übergangsebene jeweils mit einer Zusatzkammer, nämlich mit einer ersten Zusatzkammer 10c auf der Seite der ersten Kammer 10a (Hauptkammer) und einer zweiten Zusatzkammer 10d auf der Seite der zweiten Kammer 10b (Pilotkammer) erweitert, wobei die beiden Zusatzkammer 10c, 10d eine geringere Querschnittsfläche aufweisen als die erste Kammer 10a bzw. die zweite Kammer 10b, die zueinander gleichen Querschnitt aufweisen. Der verschiebliche Stellkörper 11 weist dementsprechend einen an den Querschnitt der beiden Kammern 10a und 10b angepassten dickeren Abschnitt auf, der von zwei zu der Ventilraumachse senkrechten Stirnflächen begrenzt wird, an die sich jeweils ein Abschnitt dünneren Querschnitts 110, 111 anschließt, der an den Querschnitt der beiden zugeordneten Zusatzkammern 10c bzw. 10d angepasst ist. In der zweiten Zusatzkammer 10d auf Seiten der zweiten Kammer 10b bzw. Pilotkammer ist endseitig ein Rückstellelement 12, insbesondere Feder, abgestützt bzw. befestigt, das mit seinem gegenüberliegenden Ende den Stellkörper 11 an der Stirnseite des dünneren zweiten Abschnitts 111 desselben abstützt. In der umlaufenden Wandung der zweiten Zusatzkammer 10d ist radialseitig auf einer Seite der betreffende zweite Einlass 9 für den Kraftstoff angeordnet, in dem oder in dessen Nähe ein Druckregulierungsmittel 16 (Restriktor) angeordnet ist. In der zweiten Kammer 10b ist auf der dem zweiten Einlass 9 gegenüberliegenden Seite, also axial von dem Ende der zweiten Zusatzkammer 10d bzw. dem zweiten Einlass 9 wegversetzt, der zweite Einlass 6 angeordnet.

Auch auf der der ersten Zusatzkammer 10c zugewandten Stirnseite des Stellkörpers 11 schließt sich an dem dickeren Abschnitt ein dünnerer erster Abschnitt 110 an, der in seinem Querschnitt an den Querschnitt der ersten Zusatzkammer 10c angepasst ist und in diesem verschieblich aufgenommen ist. In diesem der ersten Zusatzkammer 10c zugeordneten dünneren ersten Abschnitt 110 des Stellkörpers 11 ist eine Kanalanordnung 180 ausgebildet, über die Kraftstoff mittels Überbrückung durch eine Bypassleitung 18 in die erste Kammer 10a (Hauptkammer) strömen kann, um dort einen betreffenden Druck auf die zugewandte Stirnseite des dickeren Abschnitts des Stellkörpers 11 auszuüben. Ferner ist auch im Bereich der zweiten Kammer 10b eine weitere Bypassleitung 17 vorgesehen, die einerseits im endseitigen Bereich der zweiten Kammer 10b angeschlossen ist und andererseits (in dem in der Fig. 2B dargestellten Zustand) in einem von dem Stellkörper 11 mantelseitig abgedeckten Bereich des Ventilraums 10 angeschlossen ist, wenn der Stellkörper 11 an einen im Ventilraum 10 vorgesehenen Anschlag 22 mittels des Rückstellelements 12 bzw. der Feder in Anlage gebracht ist. Im Endbereich der ersten Zusatzkammer 10c ist radialseitig der erste Einlass 8 für Kraftstoff sowie ein zugeordnetes Druckregulierungsmittel 15 (Restriktor) angeordnet und diesem radialseitig gegenüber, gegebenenfalls etwas axial zur ersten Kammer 10a hin versetzt, der erste Auslass 5.

Bei dem in Fig. 2B gezeigten Ausführungsbeispiel ist im Anschluss endseitig an die erste Zusatzkammer 10c eine Auffangkammer 19 mit einem, vorzugsweise endseitig, eingebrachten Halteelement 20, insbesondere in Ausbildung als Magnet, angeschlossen, in der im Versagensfall gegebenenfalls anfallende Bruchstücke von Komponenten im Innern der Ventileinheit 100 aufgenommen werden können, so dass diese die Funktion nicht zusätzlich stören. In die zweite Zusatzkammer 10d ist hierbei ergänzend zu dem Rückstellelement 12 in Form der Feder ein zusätzliches elastisches Element 21, insbesondere eine zusätzliche Stützfeder, eingesetzt, die kürzer ist als das Rückstellelement 12, wodurch bei Anschlag des Stellkörpers 11 in der betreffenden Verschiebeposition eine zusätzliche, erhöhte Stützkraft erzeugt wird. Eine entsprechende oder ähnliche Funktion kann mittels einer Feder mit nichtlinearer Kennlinie erzeugt werden.

Das zusätzliche elastische Element 21, insbesondere in Form der kürzeren Stützfeder, oder die Feder mit der nichtlinearen Federkennlinie in der zweiten Zusatzkammer 10d (dabei der steifere Teil) ersetzt einen Anschlag auf der betreffenden (in der Zeichnung linken) Seite für die (Haupt-)Feder bzw. den weicheren Teil der Feder bei Hochlastbedingungen mit PH>>PP (Druck in der ersten bzw. Hauptkammer sehr viel größer als Druck in der zweiten bzw. Pilotkammer), da in dieser Situation das Rückstellelement 12 bzw. die betreffende Feder nicht ganz eingedrückt ist, um Raum für die weitere Kolbenverschiebung in einem Notfallszenario zu geben. Im Normalbetrieb verhindert die Stützfeder bzw. der härtere Teil der Feder also ein durch Schwankungen in den Kräfteverhältnissen versehentliches Freigeben des zweiten Auslasses 6 bzw. der Pilotleitung durch den Stellkörper 11 (etwa durch Fliehkräfte im Flug oder Schwankungen im Kraftstoffdruck). Auch hierbei kann im Ventilraum 10 ein Stopper bzw. Anschlag 22 vorgesehen sein, der die Nullposition des Stellkörpers 11 bzw. Kolbens bei entspanntem Rückstellelement 12 markiert.

Nähere Angaben zum Sinn der Unterteilung des Ventilraums 10 bzw. der ersten und/oder zweiten Kammer 10a, 10b in mehrere Abschnitte unterschiedlichen Querschnitts sind in der genannten, nicht vorveröffentlichten deutschen Patentanmeldung Nr. 10 2023 203 281.3 gemacht, auf die insoweit ergänzend hingewiesen sei. Auch zur näheren Erläuterung, wie sich die Leitungen der Kraftstoffzuführung und darin angeordnete Druckregulierungsmittel 15, 16 (Restriktoren) auf sich ergebende Drucksituationen insbesondere auch in der Ventileinheit 100 auswirken, sei auf die deutsche Patentanmeldung Nr. 10 2023 203 281.3 hingewiesen.

Wie eingangs erwähnt kann der verschieblich in dem Ventilraum 10 gelagerte Stellkörper 11 in Abhängigkeit des Betriebszustands der Brennkammer 2 bzw. des Triebwerks eine Position einnehmen, in der er den zweiten Auslass 6 verschließt, wodurch darüber die Zuführung von Kraftstoff zu der Kraftstoffdüse, insbesondere der Pilotstufe, instantan unterbunden wird, bedingt durch einen unweigerlichen Effekt bei inkompressiblen, flüssigen Kraftstoffen. Infolgedessen kann die Druckdifferenz zwischen erster und zweiter Kammer 10a, 10b bzw. Pilot- und Hauptkammer bei höheren Betriebspunkten nicht weiter ansteigen, so dass der bewegliche Stellkörper 10 in einer metastabilen und schwer vorhersehbaren Position verbleibt. Im Betrieb kann es daher passieren, dass Druckschwankungen zwischen Pilot- und Hauptkammer zu einem Hin- und Herbewegen des Zylinders gerade an der Position führen, an der der zweite Auslass 6 bzw. Pilotauslass verschlossen wird, so dass sich der betreffende Auslass 6 immer wieder öffnen kann und kurzfristig Kraftstoff auf die betreffende Stufe, vorliegend Pilotstufe, der Kraftstoffdüse 3 gegeben wird. Ein ruhiger, schadstoffarmer und vorhersehbarer Betrieb der Brennkammer 2 kann so nicht gewährleistet werden.

Um diesen Nachteil zu beheben, ist die Ventileinheit 100 im Unterschied zu dem in der genannten deutschen Patentanmeldung Nr. 10 2023 203 281.3 dargelegten Ausführung mit einem weiteren Einlass 23 und einem weiteren Auslass 24 versehen, wie in den Fig. 3, 4 und 6A bis 9 gezeigt. Im Übrigen wird der in der Patentanmeldung Nr. 10 2023 203 281.3 dargestellte Aufbau zugrunde gelegt.

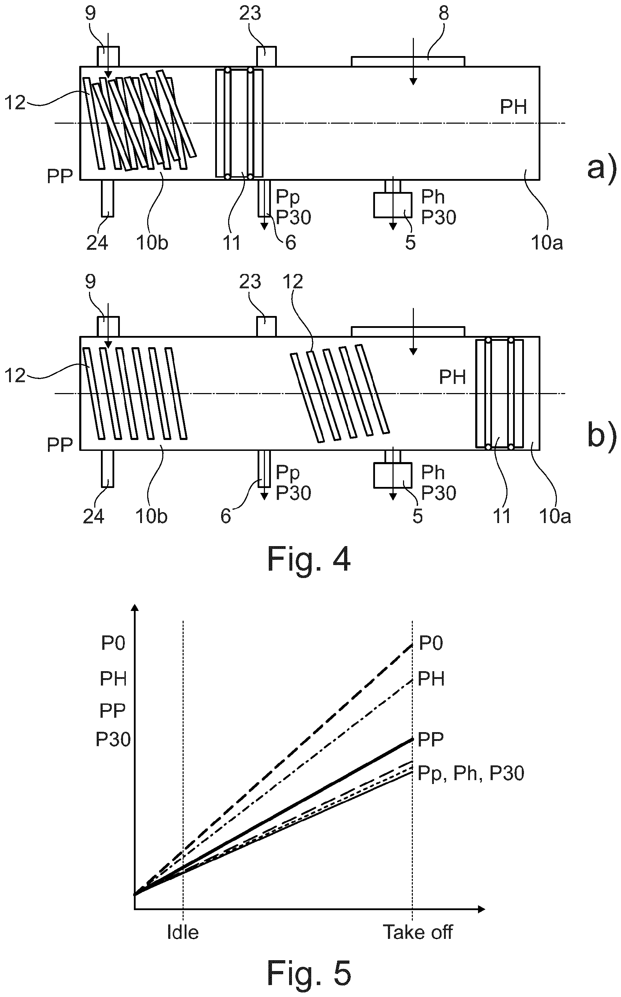

Die grundsätzliche Funktionsweise der so gestalteten erfindungsgemäßen Ventileinheit 100 im Zusammenhang mit der Kraftstoffzuführung wird nachfolgend prinzipiell anhand der Fig. 3 mit Teilbildern a), b) und c) sowie der Fig. 4 mit den Teilbildern a) und b) erläutert.

Durch die Druckdifferenz DP=PH-PP in der ersten und zweiten Kammer 10A und 10B (bzw. in der Hauptkammer und Pilotkammer) wirkt auf den Stellkörper 11 eine Druckkraft, die den Stellkörper 11 bewegen will. Dem entgegen wirkt die Federkraft des Rückstellelements 12. Durch Änderung der Druckdifferenz DP ändert sich die Differenz zwischen Druckkraft und Federkraft. Wenn diese von Null abweicht, wird der Stellkörper 10 entsprechend verschoben, bis sich wieder ein Gleichgewicht der Kräfte einstellt und der Stellkörper 10 eine neue Position einnimmt. Je nach Position des Stellkörpers 10 kann der zweite Auslass 6 zu der entsprechenden Stufe, insbesondere Pilotstufe, der Kraftstoffdüse 3 verschlossen werden und so der Kraftstofffluss in die an den zweiten Auslass 6 angeschlossene Ableitung, insbesondere Pilotleitung, unterbrochen werden. Damit nach Verschluss des zweiten Auslasses 6 bzw. der Pilotleitung in der zweiten Kammer 10b (Pilotkammer) weiterhin das benötigte höhere Druckniveau als in der ersten Kammer 10a (Hauptkammer) aufrecht gehalten wird, ist erfindungsgemäß an der zweiten Kammer 10b der weitere Auslass 24 mit einer daran angeschlossenen Anschlussleitung vorhanden. Der weitere Auslass 24 ist axial gegenüber dem zweiten Auslass 6 in Richtung zum Ende der zweiten Kammer 10b hin versetzt. Die Anschlussleitung von dem weiteren Auslass 24 wird so angeschlossen, dass sie in die Hauptstufe der Kraftstoffdüse 3 bzw. des Brenners mündet. Insbesondere ist der weitere Auslass 24 mit der angeschlossenen Anschlussleitung bis zum Austritt aus der Kraftstoffdüse 3 so ausgebildet, dass darin (nahezu) der Druckverlust induziert wird wie eine Strömung über den zweiten Auslass 6 bzw. die betreffende Pilotleitung. Daher wird, soweit erforderlich, die an den weiteren Auslass 24 anschließende Anschlussleitung bzw. weitere Hauptleitung erst sehr weit stromab in die an den ersten Auslass 5 angeschlossene Anschlussleitung bzw. Hauptleitung geführt, gegebenenfalls erst stromab etwaiger Trimmblenden in der an den ersten Auslass 5 anschließenden Anschlussleitung bzw. Hauptleitung zwischen der Ventileinheit 100 und einem Austritt aus der Kraftstoffdüse.

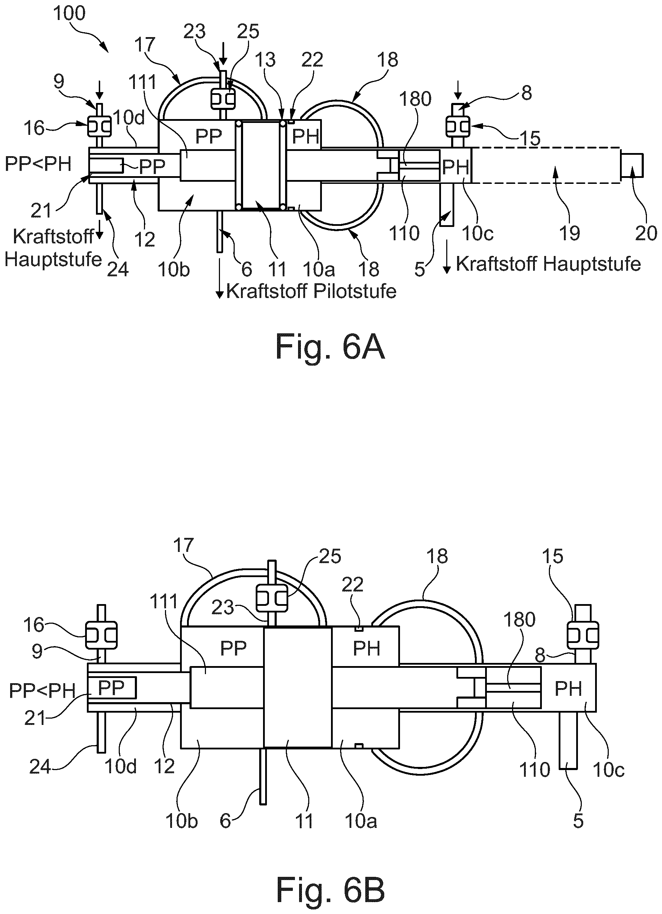

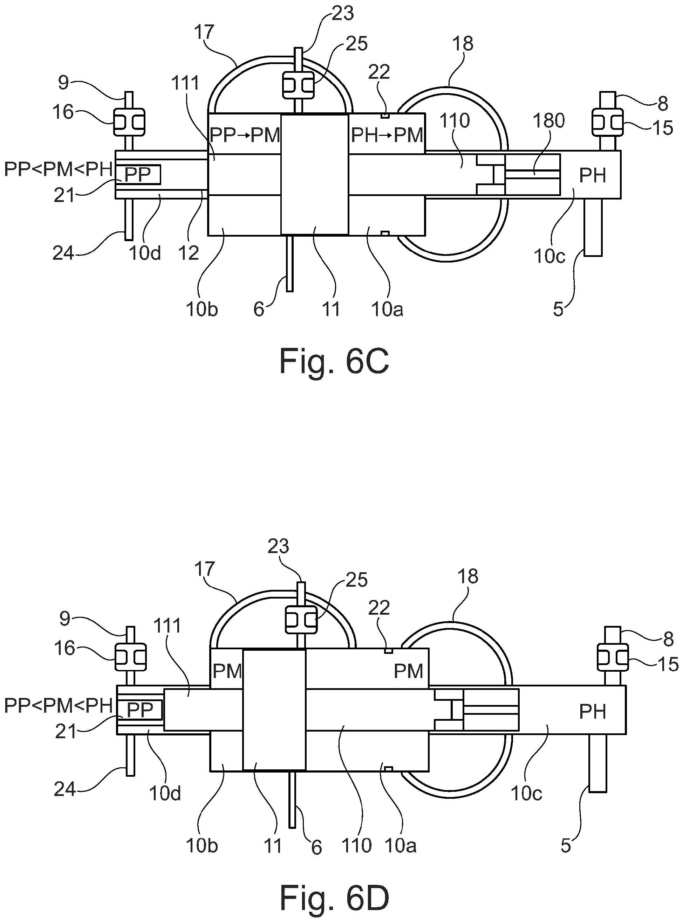

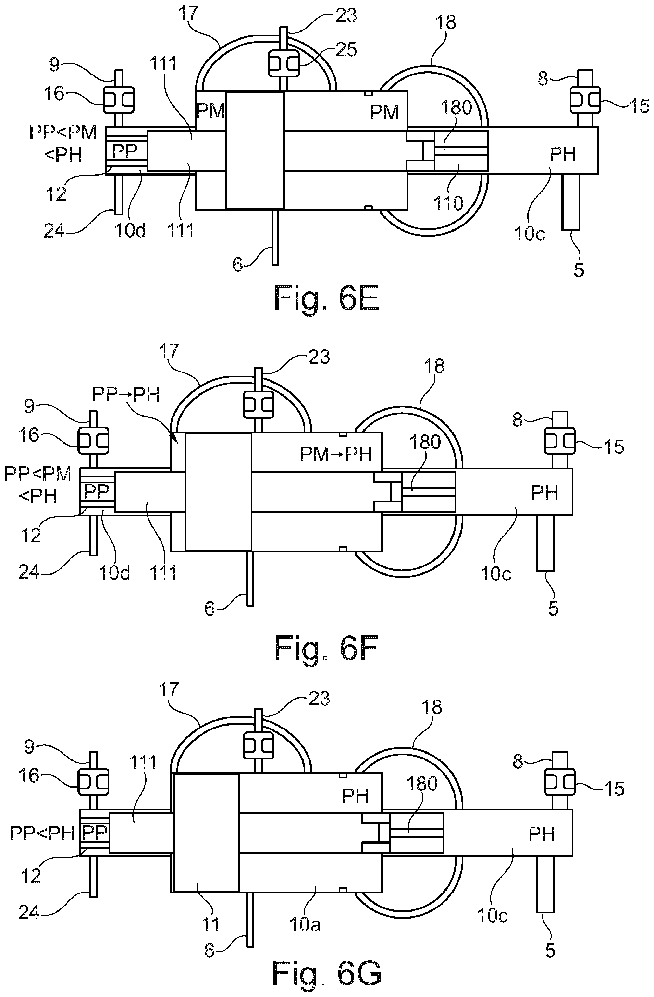

Um den Massenstrom durch die zweite Kammer 10b bzw. Pilotkammer so einzustellen, dass beim Übergang von offenem zu geschlossenem Anschluss 6 (und umgekehrt) kein Sprung (auf oder ab) des Druckes stattfindet, wird mit dem Öffnen oder Verschließen des zweiten Auslasses 6 auch der Massenstrom in die Kammer 10b angepasst. Daher ist in gleicher axialer Position wie der zweite Auslass 6 ein weiterer Einlass 23 angeordnet, z. B. diametral gegenüberliegend. Die an dem weiteren Einlass 23 angeschlossene Zuführleitung ist mit einem Druckregulierungsmittel 25 (Restriktor) (vgl. Fig. 6) ausgestattet, das so dimensioniert ist, dass im Falle eines offenen zweiten Auslasses 6 über den zweiten Einlass 9 und den weiteren Einlass 23 bzw. über die daran angeschlossenen Zuführleitungen Kraftstoff mit demselben Druckverlust aus der Vorkammer 4 bzw. der Verteilerleitung 1 (Manifold) in die zweite Kammer 10B eintritt. Darüber hinaus sind die an den weiteren Einlass 23 angeschlossene Zuführleitung und ein darin gegebenenfalls angeordnetes Druckregulierungsmittel 25 (Restriktor) so dimensioniert, dass sie exakt den Massenstrombedarf für die betreffende Stufe (Pilotstufe) der Kraftstoffdüse 3 bzw. des Brenners im Falle eines offenen zweiten Auslasses 6 liefern. Wird der zweite Auslass 6 geschlossen, so tritt in die zweite Kammer 10b nur noch Kraftstoff über den zweiten Einlass 9 und ein darin gegebenenfalls angeordnetes Druckregulierungsmittel 15 (Restriktor) ein und den weiteren Auslass 24, der an die Anschlussleitung zur Hauptstufe angeschlossen ist, aus. Die Zuführleitung zu dem zweiten Einlass 9, das Druckregulierungsmittel 15 und die Anschlussleitung an dem weiteren Auslass 24 sind so dimensioniert, dass mit dem Wegfall (oder dem Hinzukommen) des Massenstrompfades von der Zuführleitung über den weiteren Einlass 23 in den zweiten Auslass 6 keine plötzliche Änderung des Druckes in der zweiten Kammer 10b stattfindet.

Teilbild a) der Fig. 3 zeigt den Zustand ohne Druck bzw. bei Druckgleichheit in der ersten und zweiten Kammer 10a, 10b (Hauptkammer und Pilotkammer) der Ventileinheit 100 bzw. PP=PH. D. h. die Brennkammer 2 befindet sich im betriebslosen Zustand bzw. das betreffende Triebwerk ist abgeschaltet, das Rückstellelement 12 in Form der Feder befindet sich in seiner Ruheposition (entspannter Zustand), d. h. die Federkraft ist Null. Der zweite Auslass 6 und der weitere Einlass 23 sind offen.

Das Teilbild b) der Fig. 3 zeigt einen Zustand, in dem sich der Brenner bzw. das Triebwerk in Betrieb befindet. Der Druck steigt und der Druck in der ersten Kammer 10a (Hauptkammer) ist größer als der Druck in der zweiten Kammer 10b (Pilotkammer), wie z. B. im Leerlauf des Triebwerks. Der Stellkörper 10 bewegt sich in Richtung der zweiten Kammer 10a, das Rückstellelement 12 wird gedrückt, der zweite Auslass 6 und der weitere Einlass 23 sind offen.

Das Teilbild c) der Fig. 3 zeigt den Zustand, bei dem der Druck weiter ansteigt, d. h. der Druck in der ersten Kammer 10a (Hauptkammer) ist sehr viel größer als der Druck in der zweiten Kammer 10b (Pilotkammer) PH >>PP, wie z. B. im Betriebszustand eines Reiseflugs oder bei Start (Take-off) des Flugzeugs. Der zweite Auslass 6 und der sich auf gleicher axialer Position befindliche weitere Einlass 23 werden durch den Stellkörper 11 überdeckt, wobei die Anordnung der Dichtmittel 13 an dem Stellkörper 11 dazu führt, dass der zweite Auslass 6 und der gegenüberliegende weitere Einlass 23 durch die Mantelfläche des Stellkörpers 11 dicht verschlossen werden.

Das Teilbild a) der Fig. 4 zeigt einen Zustand, in dem sich die Brennkammer 2 bzw. das Triebwerk in Betrieb befinden, wobei der Druck in der ersten Kammer 10a (Hauptkammer) größer ist als der Druck in der zweiten Kammer 10b (Pilotkammer), d. h. PH>PP bzw. PH>>PP. Das Rückstellelement 12 bzw. die Feder versagt und wird deshalb durch Verlust der Federkraft komplett zusammengedrückt. Der Stellkörper 11 bewegt sich weiter in die zweite Kammer 10b, so dass der zweite Auslass 6 und der gegenüberliegende Einlass 23 wieder freigegeben werden. Damit ist ein sicherer Betrieb der Brennkammer bzw. des Triebwerks unter allen Umständen gewährleistet, da sowohl die Anschlussleitung über den zweiten Auslass 6 als auch die Anschlussleitung über den ersten Auslass 5 bzw. sowohl Pilot- als auch die Hauptleitung mit Kraftstoff versorgt werden.

Das Teilbild b) der Fig. 4 zeigt einen Zustand, bei dem das Rückstellelement 12 bzw. die Feder gebrochen ist. Der Betrieb der Brennkammer 2 bzw. das Triebwerk wird abgeschaltet, der Stellkörper 11 kann sich frei bewegen und je nach Einbausituation bzw. Lage der Ventileinheit 100 in dem Kraftstoffversorgungssystem bzw. dem Triebwerk eine Position im Ventilraum 10 einnehmen. Dazu ist eine weitere Sicherheitsposition auf der Seite der ersten Kammer 10a (Hauptkammer) vorhanden, in die der Stellkörper 11 durch Einschalten einer Kraftstoffpumpe und Aufbau von Druck P0 (in der Verteilerleitung bzw. Manifold) und damit PH und PP geschoben wird, so dass auch hier unter allen Umständen der zweite Auslass 6 und der erste Auslass 5 bzw. die Pilotleitung und die Hauptleitung stets frei sind. In diesem Zustand erstreckt sich die zweite Kammer 10b über ein Volumen des Ventilraums 10, das im Normalbetrieb eigentlich der ersten Kammer 10a (Hauptkammer) vorbehalten gewesen wäre. Die erste Kammer 10a (Hauptkammer) wird nicht mehr mit Kraftstoff versorgt, die zweite Kammer 10b (Pilotkammer) umfasst nun sowohl den ersten Einlass 8 als auch den zweiten Einlass 9 sowie auch den ersten Auslass 5 und den zweiten Auslass 6.

Wie vorstehend anhand der Fig. 1 erläutert, ist die Einbaulage der Ventileinheit 100 unerheblich, sie kann beispielsweise direkt oberhalb (radial) an oder neben der Kraftstoffdüse 3 angebracht sein und es ist auch möglich, dass die Ventileinheit 100 mehrere Kraftstoffdüsen 3 versorgt, beispielsweise über ein Y-Stück, welches die Kraftstoffströme dann gleichmäßig auf in diesem Fall zwei Kraftstoffdüsen aufteilt.

Fig. 5 zeigt in einem Diagramm den Zusammenhang zwischen den verschiedenen Drücken P0 (in der Verteilerleitung 1 bzw. Manifold), PH (in der ersten Kammer 10a, Hauptkammer), PP (Druck in der zweiten Kammer 10b, Pilotkammer), Pp (Druck stromab der zweiten Kammer 10b), Ph (Druck stromab der ersten Kammer 10a) und P30 (Druck am Brennkammereintritt) im Betriebsbereich eines Triebwerks, insbesondere zwischen Leerlauf (Idle) und Start (Take-off).

Die Fig. 6A bis 6G zeigen ein Ausführungsbeispiel für eine erfindungsgemäße Ventileinheit 100 in detaillierterer Darstellung mit angegebenen Betriebszuständen bzw. dabei vorliegenden Druckzuständen.

Fig. 6A zeigt dabei eine Ausführung mit einer zusätzlichen Auffangkammer 19, ähnlich Fig. 2B, jedoch mit dem weiteren Einlass 23, in dessen Zuleitung ein weiteres Druckregulierungsmittel 25 angeordnet ist, und dem weiteren Auslass 24, der zu der Hauptstufe des Brenners bzw. der Kraftstoffdüse 3, insbesondere unter Anschluss an die an den ersten Auslass 5 angeschlossene Anschlussleitung, führt. Über die Auffangkammer 19 können z. B. im Falle eines Federbruchs Bruchstücke aufgenommen werden, die mittels eines endseitig der Auffangkammer 19 angeordneten Magneten 20 festgehalten werden können. Auch bei dieser Ausführung schließt sich an die feste Stirnwand der ersten Kammer 10a und der zweiten Kammer 10b eine erste Zusatzkammer 10c bzw. eine zweite Zusatzkammer 10d mit gegenüber der ersten und der zweiten Kammer 10a, 10b (Hauptkammer bzw. Pilotkammer) verringertem, aber gleichbleibendem Querschnitt an. Der in dem Ventilraum 10 verschieblich gelagerte, die erste Kammer 10a von der zweiten Kammer 10b fluiddicht mittels umlaufender Dichtelemente 13 trennende Verstellkörper 11 weist stirnseitig abstehende, an den Querschnitt der ersten bzw. zweiten Zusatzkammer 10c, 10d angepasste Abschnitte, einen ersten Abschnitt 110 und einen zweiten Abschnitt 111, auf. Ferner sind an dem Ventilgehäuse 101 eine die erste Kammer 10a und die zweite Kammer 10b in gewissen Betriebszuständen verbindende Bypassleitung 17 und eine die erste Kammer 10a mit der ersten Zusatzkammer 10c verbindende Bypassleitung 18 angeordnet. Der Stellkörper 11 ist an seiner der zweiten Zusatzkammer 10d zugewandten Stirnseite mittels des Rückstellelements 12 gegen die von dieser Stirnseite des Stellkörpers 11 abgewandte innere Stirnseite der zweiten Zusatzkammer 10d mittels des Rückstellelements 12 in Form einer Feder abgestützt. Dabei ist vorliegend das Rückstellelement 12 mit einem elastischen Element 21 in Form einer Stützfeder ergänzt, welche so ausgebildet und angeordnet ist, dass sie das Rückstellelement 12 bei Hochlastbedingungen unterstützt, wenn der Stellkörper 11 weit auf die Seite der zweiten Kammer 10b, in der Fig. die linke Seite, wandert. Das elastische Element 21 ersetzt einen Anschlag auf der Seite der zweiten Kammer 10b bzw. zweiten Zusatzkammer 10d für das Rückstellelement 12 bei Hochlastbedingungen, wobei PH>>PP, da in dieser Situation das Rückstellelement 12, insbesondere in Form der Feder, nicht ganz eingedrückt ist, um Raum für die weitere Kolbenverschiebung in einem Notfallszenario zu geben. Im regulären Betrieb bzw. Normalbetrieb verhindert das elastische Element 21 in Form der Stützfeder also ein durch Schwankungen in den Kräfteverhältnissen auf den Stellkörper 11 versehentliches Freigeben des zweiten Auslasses 6 (etwa durch Fliehkräfte im Flug oder Schwankungen im Kraftstoffdruck).

Im Ventilraum 10 kann ferner ein Anschlag 22 bzw. Stopper vorgesehen werden, der die Nullposition des Stellkörpers 10 bei entspanntem Rückstellelement 12 markiert.

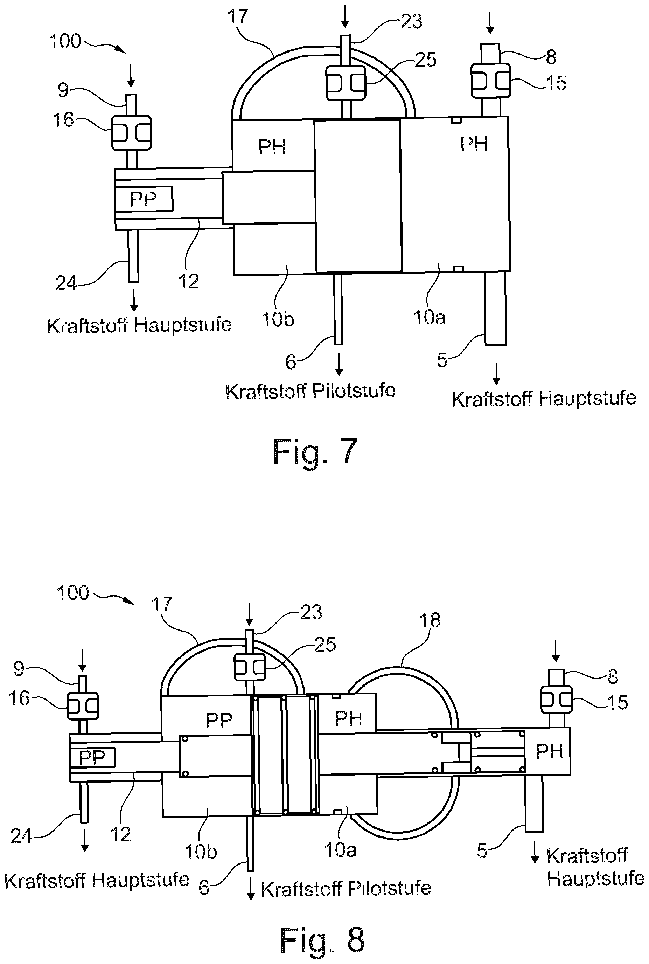

Der Stellkörper 11 kann, wie angesprochen, aus mehreren Abschnitten unterschiedlicher Durchmesser bestehen, also aus z. B. drei Abschnitten dreier oder zweier unterschiedlicher Durchmesser, wie in dem Ausführungsbeispiel nach den Fig. 6A bis 6G sowie den Fig. 8 und 9. Bei dem Ausführungsbeispiel nach Fig. 7 ist diesen Fig. gegenüber die erste Zusatzkammer 10c und entsprechend der erste Abschnitt 110 weggelassen, so dass der Stellkörper 11 dabei insoweit vereinfacht ist, als er nur zwei Abschnitte unterschiedlicher Durchmesser aufweist.

Der Sinn der Aufteilung des Ventilraums 10 und entsprechend des Stellkörpers 11 in Abschnitte verschiedenen Durchmessers bzw. Querschnitts besteht darin, dass die Flächenlast auf die Stirnflächen des Stellkörpers 11 infolge der Druckdifferenz DP=PH-PP von der Position des Stellkörpers 11 abhängig gemacht werden kann. Dadurch kann eine kompakte Ventileinheit 100 realisiert werden, die über einen sehr weiten Druckbereich arbeiten kann. Um diese Funktionalität zu erreichen, sind die entsprechend angeordneten Bypassleitungen 17 und 18, im Falle der Ausführung nach Fig. 7 nur die Bypassleitung 17, vorhanden, die dafür sorgen, dass bei bestimmten Positionen des Stellkörpers 11 die Stirnflächen des dickeren Kolbenabschnitts auf beiden Seiten denselben Druck sehen und somit aus der Kräftebilanz herausfallen. Diese Funktionsweise an sich ist auch in der genannten deutschen Patentanmeldung Nr. 10 2023 203 281.3 erläutert und wird im Folgenden im Zusammenhang mit den gegenüber dieser Voranmeldung unterschiedlichen Merkmalen noch eingehender erklärt.

Die Fig. 6A zeigt analog den Betriebszustand wie Fig. 3A, also die Ruheposition bzw. Nominalposition, wobei die Kraftstoffversorgung der betreffenden Stufe, insbesondere Pilotstufe, über die zweite Kammer 10b und der ersten Stufe, bzw. Hauptstufe, über die erste Kammer 10a bei Betriebsbedingungen ab der Zündung der Brennkammer bis in den Niederlastbereich erfolgt. Dabei ist die Druckdifferenz DP=PH-PP Null oder so gering, dass der Stellkörper 10 allein durch das Rückstellelement 12 in der Anschlagposition der ersten Kammer 10a bzw. in der Fig. der rechten Anschlagposition gehalten wird (in Kontakt mit dem Anschlag 22). Das Rückstellelement 12 hat gegebenenfalls eine Vorspannung in der Nominalposition. Der Stellkörper 11 wird auf beiden Seiten über die volle Fläche (also die Stirnflächen der dünnen und dicken Stellkörperabschnitte) mit dem Druck PP (in der zweiten Kammer 10b, Pilotkammer) bzw. dem Druck PH (in der ersten Kammer 10a, Hauptkammer) bedruckt. Auf der Seite der ersten Kammer 10a (in Fig. rechte Seite) muss dazu der Kraftstoff auf der Seite der ersten Kammer 10a den Druck PH sehen (betreffender dicker Abschnitt des Zylinderraums 10). Dazu drückt Kraftstoff in den dünneren, ersten Abschnitt 110 des Stellkörpers durch die dortige Stirnfläche, dann durch die darin angeordneten internen Kanäle 180 und anschließend durch die Bypassleitung 18. Die Bypassleitung 18 ist z. B. axialsymmetrisch oben und unten (gegebenenfalls auch in weiteren gegenüberliegenden Raumrichtungen) vorhanden, um ein Verkanten des Stellkörpers 11 durch Radiallasten zu verhindern. Auf der Seite der zweiten Kammer 10b des Ventilraums 10, vorliegend also auf der linken Seite, verschließt der dortige dünne zweite Abschnitt 111 des Stellkörpers 11 nicht den Übergang zwischen der dortigen (linken) zweiten Zusatzkammer 10d und der zweiten Kammer 10b, so dass beide Kammern 10b und 10d miteinander hydraulisch verbunden sind und denselben Druck aufweisen.

Fig. 6B zeigt einen Zustand, in dem der zweite Auslass 6 (zur Pilotstufe) und der in gleicher axialer Position angeordnete, gegenüberliegende Einlass 23 verschlossen werden. Der Betriebszustand der Brennkammer 2 bzw. des Triebwerks ist über den Niederlastbereich hinaus hochgefahren. Durch die zunehmende absolute Druckdifferenz zwischen der zweiten Kammer 10b (Pilotkammer) und der ersten Kammer 10a (Hauptkammer) hat sich der Stellkörper 11 entgegen dem Rückstellelement 12 bzw. der Feder verschoben. Bei dieser Bedingung verschließt die Mantelfläche des dicken Abschnitts des Stellkörpers 11 gerade den zweiten Auslass 6 der zweiten Kammer 10b und den sich auf gleicher axialer Position befindlichen gegenüberliegenden Einlass 23 und deaktiviert damit die Kraftstoffversorgung der betreffenden Stufe (insbesondere Pilotstufe) über die zweite Kammer 10b. Im Übrigen entspricht die Situation derjenigen der Fig. 6A.

Die Fig. 6C zeigt eine Situation, in der der mittlere, dicke Abschnitt des Stellkörpers 11 und der mittlere Bereich des Ventilraums 10 mit der ersten und zweiten Kammer 10a, 10b funktionell ausgekoppelt sind, um Verschiebungen im Mittel- und Hochlastbetrieb der Brennkammer 2 bzw. des Triebwerks zu reduzieren. Der zweite Auslass 6 (Pilotauslass) ist verschlossen. Da die absolute Druckdifferenz bei Betriebspunkten oberhalb des Niederlastbereichs sehr stark ansteigt, kann die Position des Stellkörpers 11 nicht mehr allein durch die Federkraft des Rückstellelements 12 in einem sinnvollen Maße reguliert werden (es würde sich eine extrem lange Ventileinheit ergeben). Daher wird die Flächenlast auf den Stellkörper 11 reduziert. Hierzu wird der mittlere Bereich des Ventilraums 10 mit der ersten und zweiten Kammer 10a, 10b ausgekoppelt, indem die internen Kanäle der Kanalanordnung 180 sich gegenüber dem Eintritt der Bypassleitung 18 so verschieben, dass dieser verschlossen wird. Gleichzeitig werden die zweite und erste Kammer 10b, 10a bzw. die linke und rechte Seite des Ventilraums 10 durch die andere Bypassleitung 17 miteinander verbunden, da die Mantelfläche des dicken mittleren Abschnitts des Stellkörpers 11 diese nun auf der Seite der ersten Kammer 10a (rechte Seite des Ventilraums 10) freigibt. Die zweite Kammer 10b (linke Seite des Ventilraums 10) wird hingegen von der zweiten Zusatzkammer 10d getrennt, da der zweite Abschnitt 111 des Stellkörpers 11 sich nun in die Übergangsebene zwischen der zweiten Kammer 10a und der zweiten Zusatzkammer 10d schiebt. In dem mittleren Bereich des Ventilraums 10 bzw. der ersten und zweiten Kammer 10a, 10b stellt sich nun durch die Verbindung der zweiten Kammer 10b und der ersten Kammer 10a ein mittlerer Druck PM ein. Verschiebt sich der Stellkörper 11 noch weiter in Richtung der zweiten Zusatzkammer 10d (in der Fig. nach links), wird Kraftstoff über die Bypassleitung 17 von der zweiten Kammer 10b in die erste Kammer 10a (in der Fig. von der linken in die rechte Seite des mittleren Bereichs des Ventilraums 10) bewegt. Somit verhindert der nun in der zweiten Kammer 10b und der ersten Kammer 10a (auf beiden Seiten des mittleren Bereichs des Ventilraums 10) eingeschlossene Kraftstoff nicht die Bewegung des Stellkörpers 11.

Die Fig. 6D zeigt die Situation, in der der Stellkörper 11 mit dem elastischen Element 21 (Stützfeder) bei Hochlastbetrieb in Kontakt tritt. Der zweite Auslass 6 (Pilotauslass) und der in gleicher axialer Position gegenüberliegende weitere Einlass 23 sind weiterhin verschlossen. Das restliche freie Volumen der zweiten Kammer 10b (Pilotkammer) wird über den Einlass 9 gespeist. Der Kraftstoff fließt über den weiteren Auslass 24 ab in die daran über den betreffenden Anschluss angeschlossene Hauptstufe der Kraftstoffdüse 3 bzw. des Brenners. Der Stellkörper 11 ist im Hochlastbetrieb nahe seiner Endposition für den Normalbetrieb. Die Situation ist ähnlich wie bei Fig. 6G, nur dass nun die Stirnfläche des zweiten Abschnitts 111 des Stellkörpers (linker Abschnitt) auf dem elastischen Element 21 (Stützfeder) aufliegt. Die Aufgabe des elastischen Elements 21 ist es, weitere Verschiebungen des Stellkörpers 11 zu dämpfen. Das elastische Element 21 ersetzt praktisch einen auf Seiten der zweiten Kammer 10b bzw. zweiten Zusatzkammer 10d angeordneten, in der Fig. linken, Anschlag, um die in den nachfolgenden Fig. 6F und 6G illustrierten und weiter unten beschriebenen Fehlerszenarien zu ermöglichen. Der zweite Auslass 6 (Pilotauslass) wird weiterhin von der Mantelfläche des mittleren, dicken Abschnitts des Stellkörpers 11 verschlossen, allerdings mittlerweile durch dessen der ersten Kammer 10a benachbarte, in der Fig. dessen rechte, Seite.

Die Fig. 6E zeigt die Ventileinheit 100 mit dem Stellkörper 11 in seiner Endposition bei Startvolllast. Der zweite Auslass 6 (Pilotauslass) und der sich in gleicher axialer Position befindliche weitere Einlass 23 sind weiterhin verschlossen. Die Situation ist nahezu identisch zu Fig. 6D. Der wesentliche Unterschied besteht darin, dass das elastische Element 21 (Stützfeder) bei Startvolllast wegen der nun maximalen Druckdifferenz zwischen PH und PP leicht belastet wird.

Die Fig. 6F zeigt die Situation in einem Versagensfall des Rückstellelements 12 (Feder bei Niederlastbedingung). Die zweite Stufe bzw. Pilotstufe wird über den zweiten Auslass 6, der nun im Bereich der ersten Kammer 10a (Hauptkammer) liegt, gespeist. Das Rückstellelement 12 ist bei der niedrigsten Bedingung, bei der im Normalbetrieb der zweite Auslass 6 (Pilotauslass) und der axial an gleicher Position liegende weitere Einlass 23 verschlossen werden, gebrochen. Da das Rückstellelement 12 nun nicht mehr die Kraft des Drucks PP in der zweiten Kammer 10b (Pilotkammer) unterstützt, wird der Stellkörper 11 durch die Druckkraft des Drucks PH der ersten Kammer 10a (Hauptkammer) soweit in Richtung der zweiten Kammer, in der Fig. nach links, gedrückt, dass der zweite Auslass 6 und der an gleicher axialer Position befindliche weitere Einlass 23 wieder freigegeben werden, allerdings auf der Seite der ersten Kammer 10a, in der Fig. der rechten Seite des Ventilraums 10. Sollte das elastische Element 21 (Stützfeder) weiterhin intakt sein, so ist ihre Federkonstante allein nicht ausreichend, um den Stellkörper 11 in einer Position zu halten, die den zweiten Auslass 6 und den an gleicher axialer Position befindlichen weiteren Einlass 23 zu verschließen. In diesem Notfallszenario soll eine versagende Ventileinheit 100 die zweite Stufe bzw. Pilotstufe dauerhaft mit Kraftstoff speisen, um so die Versorgung der Kraftstoffdüse 3 und die Verbrennung in allen Situationen zu gewährleisten. Der gesamte mittlere Bereich des Ventilraums 10 wird nun mit dem Druck PH der ersten Kammer 10a (Hauptkammer) bedruckt, da der Stellkörper 11 nun keine der Bypassleitungen 17 und 18 blockiert. Auch die internen Kanäle der Kanalanordnung 180 in dem ersten Abschnitt 110 des Stellkörpers 11 verbinden nun die erste Zusatzkammer 10c mit der ersten Kammer 10a. Die Stirnflächen des mittleren, dicken Abschnitts des Stellkörpers 11 haben daher keinen Einfluss auf die Position des Stellkörpers 11.

Die Fig. 6G zeigt die Situation in einem Versagensfall des Rückstellelements 12 (Feder) bei Hochlastbedingungen bis einschließlich Volllast (Start, Take-off). Die zweite Stufe bzw. Pilotstufe wird über die erste Kammer 10a (Hauptkammer) gespeist. Das Szenario ist vergleichbar mit Fig. 6F, nur dass bei Hochlast der Druck PH der ersten Kammer 10a (Hauptkammer) so groß ist, dass der Stellkörper 11 soweit in Richtung der zweiten Kammer 10b, in der Fig. nach links, gedrückt wird, dass er innerhalb des mittleren Bereichs des Ventilraums 10 anschlägt.

Fig. 7 zeigt ein gegenüber der Ausführung nach den Fig. 6A bis 6G vereinfachtes Ausführungsbeispiel einer Ventileinheit 100, wobei auf der Seite der ersten Kammer 10a bzw. auf der rechten Seite der Abb. der erste, dünne Abschnitt 110 des Stellkörpers 11 sowie die erste Zusatzkammer 10c weggelassen sind und auch die Bypassleitung 18 fehlt. Im Übrigen ist die Funktion analog zu vorstehender Beschreibung zu der Ausführung nach den Fig. 6A bis 6G. Ist der Stellkörper 11 ab einer bestimmten Druckdifferenz DP=PH-PP in Richtung der zweiten Kammer 10b bzw. nach links verschoben, blockiert er den zweiten Auslass 6 (Pilotauslass) und den auf gleicher axialer Höhe befindlichen weiteren Einlass 23. Ist der Stellkörper 11 noch weiter in Richtung zweite Kammer 10b bzw. nach links verschoben, so trennt der dortige dünne zweite Abschnitt 111 die zweite Kammer 10b von der anschließenden zweiten Zusatzkammer 10d ab und die Bypassleitung 17 wird freigegeben, wie aus Fig. 7 ersichtlich. Dadurch herrscht nun in der zweiten Kammer 10b ebenfalls nur noch der Druck PH wie in der ersten Kammer 10a bzw. der Hauptkammer. Infolgedessen ist in der Kräftebilanz der Druckkräfte an dem Stellkörper 11 der Anteil der der ersten Kammer 10a zugekehrten bzw. rechten Stirnfläche des Stellkörpers 11, der über die Stirnfläche des zweiten, schlanken Abschnitts 111 hinausgeht, eliminiert. Der entsprechende Effekt wird auch bei der komplexeren Ausführung nach den Fig. 6A bis 6G bewirkt, nur dass der mittlere Bereich des Ventilraums 10 dort mit einem recht niedrigen Zwischendruck PM bedruckt ist, während bei der Ausführung nach Fig. 7 der Druck PH in der ersten Kammer bzw. dem mittleren Bereich des Ventilraums 10 vorliegt. Das bedeutet, dass über die Bypassleitung 17 bei weiterem Verschieben des Stellkörpers 11 auch Kraftstoff mit dem Druck PH (statt PM wie in der Ausführung nach den Fig. 6A bis 6G) bewegt wird. Dies ist ein Nachteil der einfacheren Ausgestaltung nach Fig. 7: die Bewegung von Kraftstoff hohen Drucks PH in der Bypassleitung 17 bedeutet einen höheren Reibungsverlust als bei dem Druck PM, infolgedessen verschiebt sich der Stellkörper 11 bei Änderung des Drucks P0 langsamer zu seiner nächsten Position. Das kann insbesondere bei Flugtriebwerken, bei denen aus Sicherheitsgründen schnelle Lastwechsel erforderlich sind (z. B. bei Startabbruch bzw. schneller Kraftstoffrücknahme, Durchstarten bei Landeabbruch und dabei erfolgender schneller Kraftstofferhöhung), nachteilig sein. Von Vorteil ist hingegen die einfachere und kompaktere Bauweise.

Nach einer weiteren, in Fig. 8 gezeigten Ausbildungsvariante ist die Ventileinheit 100 derart gestaltet, dass über einen bestimmten Betriebsbereich (der stationär oder transient durchfahren wird) sowohl die zu der zweiten Stufe bzw. Pilotstufe als auch die zu der ersten bzw. Hauptstufe führende Kraftstoffleitung bzw. der betreffende zweite und erste Auslass 6, 5 mit Kraftstoff versorgt werden. Dies geschieht hauptsächlich dazu, um den Übergang von der einen zur anderen Kraftstoffversorgungsleitung fließend zu gestalten. Beispielhaft zeigt die Fig. 8 den Stellkörper 11 in einer Position, in welcher der zweite Auslass 6 bzw. Pilotauslass und der auf gleicher axialer Höhe befindliche weitere Einlass 23 vollständig freigegeben sind und der erste Auslass 5 bzw. die betreffende Hauptleitung weitgehend freigegeben ist.

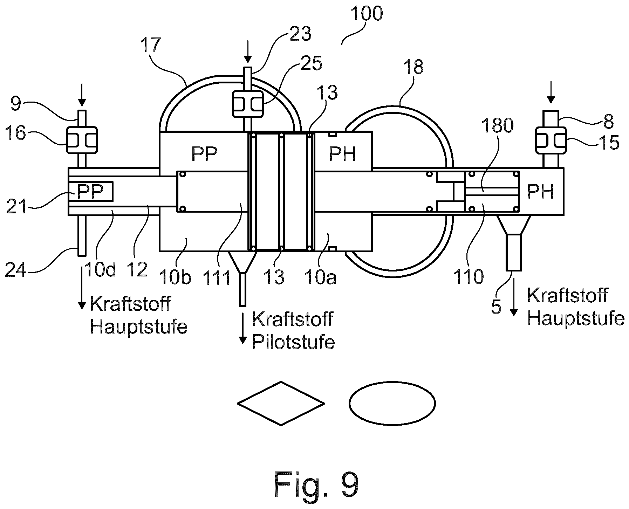

Eine Ausführungsvariante mit weiteren Details ist in Fig. 9 gezeigt. Diese zeigt zwei weitere Ausgestaltungsoptionen, um den Übergang von der einen zur anderen Kraftstoffversorgung zu beeinflussen. Zum einen sind die Übergänge vom Ventilraum 10 in die Kraftstoffleitungen bzw. den ersten und den zweiten Auslass 5, 6 trichterförmig gestaltet. Damit lässt sich der Betriebsbereich (bzw. der Bereich der Stellung des Stellkörpers 11), in dem beide Kraftstoffleitungen mit Kraftstoff versorgt werden, in einer gewünschten Weise ausdehnen. Zum anderen können die Übergänge zu den Auslässen mit Querschnitten versehen werden, welche zusätzlich die Aufteilung des Kraftstoffstroms zwischen der zweiten Stufe bzw. Pilotstufe und der ersten Stufe bzw. Hauptstufe während der Übergangsphase in einer definierten Weise beeinflussen. Diese Querschnitte können beispielsweise dreieckig, rautenförmig oder oval sein.

Um erwünschte Kraftstoffflüsse zwischen der Innenwand des Gehäuses 101 der Ventileinheit 100 und der Mantelfläche des Stellkörpers 11 zu minimieren bzw. zu beseitigen, kann der Stellkörper 11 an verschiedenen Positionen mit Dichtmitteln 13 versehen sein, beispielsweise mit in Nuten eingelegten O-Ringen. In den Fig. sind hierzu beispielhafte Ausgestaltungsmöglichkeiten gezeigt.

## Patentansprüche

1. Ventileinheit (100) mit einem in einem Gehäuse (101) angeordneten, insbesondere zylindrischen, Ventilraum (10), welcher mittels eines verstellbar und fluiddicht in dem Ventilraum (10) angeordneten Stellkörpers (11) in zwei fluiddicht voneinander getrennte, von Kraftstoff durchströmbare oder durchströmte Kammern, eine erste Kammer (10a) und eine zweite Kammer (10b), unterteilt ist, wobei
- der Ventilraum (10) einen ersten Einlass (8) zur Zuführung eines ersten Kraftstoffanteils, insbesondere Hauptkraftstoff, und einen zweiten Einlass (9) zur Zuführung eines zweiten Kraftstoffanteils, insbesondere Pilotkraftstoff, aufweist,
- der Ventilraum (10) einen ersten Auslass (5), insbesondere zur Kraftstoff-Versorgung einer Triebwerks-Hauptstufe, und einen zweiten Auslass (6), insbesondere zur Kraftstoff-Versorgung einer Triebwerks-Pilotstufe, aufweist,
- die Ventileinheit (100) ein in einer der Kammern (10a, 10b), insbesondere in der zweiten Kammer (10b), angeordnetes, mit dem Stellkörper (10) kraftübertragend gekoppeltes, elastisches Rückstellelement (12), insbesondere eine Federanordnung, aufweist, und
- die Ventileinheit (100) derart ausgebildet ist, dass eine Stellkraft zur Positionierung des Stellkörpers (11) innerhalb des Ventilraums (10) durch ein Zusammenwirken einer Rückstellkraft des Rückstellelements (12) mit einer zwischen den Kammern (10a, 10b) vorliegenden Druckdifferenz erzeugt wird, die zwischen den Kraftstoffdrücken innerhalb der Kammern (10a, 10b) resultiert, wodurch der Stellkörper (11) in eine den zweiten Auslass (6) versperrende Schließposition verstellbar ist,
**dadurch gekennzeichnet,**
**dass** die zweite Kammer (106) mit einem weiteren Einlass (23) zur Zuführung eines weiteren Kraftstoffanteils und einem weiteren Auslass (24) versehen ist, über den Kraftstoff aus der zweiten Kammer (106) ableitbar ist und der geöffnet bleibt, wenn sich der Stellkörper (11) in der Schließposition des zweiten Auslasses (6) befindet, und
**dass** der weitere Auslass (24) zur Versorgung der Triebwerks-Hauptstufe mit Kraftstoff ausgebildet ist, insbesondere durch Anschluss an den ersten Auslass (5) in dessen stromabseitigem Bereich.

2. Ventileinheit nach Anspruch 1,
**dadurch gekennzeichnet,**
**dass** der weitere Einlass (23) an der zweiten Kammer (10b) axial in entsprechender Position wie der zweite Auslass (6) angeordnet ist, so dass er ebenfalls durch den Stellkörper (11) versperrt ist, wenn sich dieser in der Schließposition des zweiten Auslasses (6) befindet.

3. Ventileinheit (100) nach einem der vorhergehenden Ansprüche,
**dadurch gekennzeichnet,**
**dass** der Ventileinheit (100) zumindest ein Druckregulierungsmittel zugeordnet ist, das zur Einstellung eines Druckverhältnisses zwischen der ersten Kammer (10a) und der zweiten Kammer (10b), vorzugsweise stromauf des Ventilraums (10), zur Erzeugung eines definierten Kraftstoff-Verhältnisses zwischen dem ersten Kraftstoffanteil und zweiten Kraftstoffanteil angeordnet ist, wobei vorzugsweise in der zweiten Kammer (10b) ein geringerer Druck als in der ersten Kammer (10a) erzeugbar oder erzeugt ist.

4. Ventileinheit nach Anspruch 3,
**dadurch gekennzeichnet,**
**dass** sowohl dem ersten Einlass (8) als auch dem zweiten Einlass (9) und/oder weiteren Einlass (23) ein Druckregulierungsmittel (15, 16, 25) zugeordnet ist, wobei im Falle, dass dem zweiten Einlass (9) und dem weiteren Einlass (23) ein Druckregulierungsmittel zugeordnet ist, dem zweiten Einlass (9) und dem weiteren Einlass (23) jeweils ein oder diesen beiden Einlässen (9, 23) über einen Y-Anschluss ein gemeinsames Druckregulierungsmittel zugeordnet ist.

5. Ventileinheit (100) nach Anspruch 3 oder 4,
**dadurch gekennzeichnet,**
**dass** das zumindest eine Druckregulierungsmittel als im Betrieb unverstellbares, passives Strömungselement, insbesondere aufweisend eine Verengung des Strömungsquerschnitts, ausgebildet ist.

6. Ventileinheit (100) nach einem der vorhergehenden Ansprüche,
**dadurch gekennzeichnet,**
**dass** die Ventileinheit (100) eine reguläre Konfiguration und/oder eine Fehlerkonfiguration einnehmen kann, wobei
- in der regulären Konfiguration der Stellkörper (11) innerhalb des Ventilraums (10) derart angeordnet ist, dass im Betrieb in einem ersten Stellmodus der erste Einlass (8), und nicht der zweite Einlass (9), durch die erste Kammer (10a) mit dem ersten Auslass (5) in Strömungsverbindung steht und/oder dass der zweite Einlass (9) und der weitere Einlass (23), und nicht der erste Einlass (8), durch die zweite Kammer (10b) mit dem zweiten Auslass (6) und dem weiteren Auslass (24) in Strömungsverbindung stehen und in einem zweiten Stellmodus zumindest der zweite Auslass (6) mittels des Stellkörpers (11) undurchströmbar versperrt ist, sodass keine Durchströmung des zweiten Auslasses (6), jedoch weiterhin eine Durchströmung der zweiten Kammer (10b) über den weiteren Auslass (24) stattfindet und/oder
- in der Fehlerkonfiguration der Stellkörper (11) innerhalb des Ventilraums (10) derart neben den Auslässen (5, 6) angeordnet ist, dass im Betrieb der erste und der zweite Auslass (5, 6) mit zumindest einem gleichen Einlass (8, 9, 23) zur Kraftstoffversorgung in Strömungsverbindung stehen und der weitere Auslass (24) zumindest mit dem zweiten Einlass (9) in Strömungsverbindung steht,
**dass** das Rückstellelement (12) derart ausgelegt ist, dass in der regulären Konfiguration sich der erste Stellmodus ohne Druckdifferenz, z. B. bei ausgeschaltetem Triebwerk, und/oder bei geringer Druckdifferenz zwischen den Kammern (10a, 10b), z. B. in einem Niederlastbereich eines Triebwerks, einstellt und/oder sich der zweite Stellmodus bei höherer Druckdifferenz als die geringe Druckdifferenz, z. B. in einem Mittel- und/oder Hochlastbereich, einstellt,
**dass** in der Fehlerkonfiguration in einer ersten Fehlerstellung der Stellkörper (11) im Vergleich zu der regulären Konfiguration weiter in Richtung des Rückstellelements (12), insbesondere unter Verkleinerung der zweiten Kammer (10b), positioniert ist und/oder in einer zweiten Fehlerstellung der Stellkörper (11) im Vergleich zu der regulären Konfiguration derart weiter in Richtung eines dem Rückstellelement (12) gegenüberliegenden Endes des Ventilraums (10) positioniert ist, insbesondere unter Verkleinerung der ersten Kammer (10a), dass der erste Einlass (8) mit der zweiten Kammer (10b) in Strömungsverbindung steht.

7. Ventileinheit (100) nach einem der vorhergehenden Ansprüche,
**dadurch gekennzeichnet,**
**dass** der Ventilraum (10) länglich, insbesondere zylindrisch, ausgebildet ist und/oder über seine Länge einen konstanten Querschnitt oder Abschnitte unterschiedlicher Querschnitte aufweist, wobei der Querschnitt innerhalb der Abschnitte konstant ist,
**dass** der Stellkörper (11) in dem Ventilraum (10) in Längsrichtung axial verschiebbar angeordnet ist, wobei der Stellkörper (11), insbesondere einen korrespondierenden Querschnitt zu dem Ventilraum (10) aufweist, um mit den Innenwänden des Ventilraums (10), vorzugsweise unter Zwischenordnung zumindest eines Dichtmittels, fluiddichtend in Kontakt zu stehen, und
**dass** innerhalb des Ventilraums (10), insbesondere in der ersten Kammer (10a), zumindest ein Anschlagelement (22) angeordnet ist, welches die Bewegung des Stellkörpers (11) durch das Rückstellelement (12) an einer Nullposition begrenzt.

8. Ventileinheit (100) nach einem der vorhergehenden Ansprüche,
**dadurch gekennzeichnet,**
**dass** an dem Ventilraum (10), insbesondere an der nicht das Rückstellelement (12) beinhaltenden Kammer (10a), eine Auffangkammer (19) zur Aufnahme von Bruchstücken von in dem Ventilraum (10) vorhandenen Elementen, insbesondere des Stellkörpers (11) und/oder des Rückstellelements (12), angeordnet ist, wobei in der Auffangkammer (19) ein Halteelement (20), insbesondere ein Magnet, angeordnet ist.

9. Ventileinheit (100) nach einem der vorhergehenden Ansprüche,
**dadurch gekennzeichnet,**
**dass** zusätzlich zu dem Rückstellelement (12) ein zweites elastisches Element (21), insbesondere eine Stützfeder, auf der Seite des Rückstellelements (12) angeordnet ist, das kürzer ausgebildet ist als das Rückstellelement (12) und zum Zusammenwirken mit dem Rückstellelement (12), insbesondere bei Hochlastbedingungen, ausgebildet ist und z. B. eine geringere Elastizität aufweist als das Rückstellelement (12), um dessen Rückstellkraft zu unterstützen, oder dass als Rückstellelement (12) eine Feder mit über den Federweg nichtlinearer Rückstellkraft eingesetzt ist.

10. Ventileinheit (100) nach einem der vorhergehenden Ansprüche,
**dadurch gekennzeichnet,**
**dass** der Ventilraum (10) Abschnitte unterschiedlicher Querschnitte aufweist, wobei in dem Ventilraum (10) seitens der ersten Kammer (10a) eine sich an die erste Kammer (10a) in axialer Richtung anschließende erste Zusatzkammer (10c) geringeren Querschnitts und/oder seitens der zweiten Kammer (10b) eine sich in entgegengesetzter axialer Richtung anschließende zweite Zusatzkammer (10d) geringeren Querschnitts ausgebildet sind,
**dass** der in dem Ventilraum verschiebliche Stellkörper (11) Abschnitte mit zu der ersten und zweiten Kammer (10a, 10b) und der ersten und/oder zweiten Zusatzkammer (10c, 10d) korrespondierendem dickeren und dünneren Querschnitt aufweist,
**dass** bei Vorhandensein der ersten und zweiten Zusatzkammer (10c, 10d) der betreffende erste bzw. zweite Einlass (8, 9) an der jeweiligen Zusatzkammer (10c, 10d) und der weitere Einlass (23) an der zweiten Kammer (10b), der erste Auslass (5) an der ersten Zusatzkammer (10c), der zweite Auslass (6) an der zweiten Kammer (10b) und der weitere Auslass (24) an der zweiten Zusatzkammer (10d) angeordnet sind und
**dass** bei Ausbildung ohne die erste Zusatzkammer der erste Einlass (8) und der erste Auslass (5) an der ersten Kammer (10a), der zweite Einlass (9) an der zweiten Zusatzkammer (10d), der weitere Einlass (23) an der zweiten Kammer (10b), der zweite Auslass (6) an der zweiten Kammer (10b) und der weitere Auslass (24) an der zweiten Zusatzkammer (10d) angeordnet sind.

11. Ventileinheit (100) nach Anspruch 10,
**dadurch gekennzeichnet,**
**dass** parallel zu dem Ventilraum (10) mindestens eine Bypassleitung (17, 18) vorhanden ist, die so angeordnet ist/sind, dass bei bestimmten Positionen des Stellkörpers (11) in dem Ventilraum (10) die beiden Stirnflächen des dickeren Abschnitts auf beiden Seiten dem gleichen Druck ausgesetzt sind, und dass bei Vorhandensein der ersten Zusatzkammer (10c) und dem dazu korrespondierenden Abschnitt dünneren Querschnitts des Stellkörpers (11) in diesem Abschnitt eine Kanalanordnung (180) ausgebildet ist, um einen Einlassbereich der ersten Zusatzkammer (10c) mit der ersten Kammer (10a) über die zugeordnete Bypassleitung (18) fluidleitend zu verbinden.

12. Ventileinheit (100) nach einem der vorhergehenden Ansprüche,
**dadurch gekennzeichnet,**
**dass** zumindest einer der Übergänge aus dem Ventilraum (10) in den ersten oder den zweiten Auslass (5, 6) zu einem anschließenden Leitungsabschnitt hin trichterförmig verjüngt ist oder einen die Aufteilung des Kraftstoffstroms zwischen dem Pilotkraftstoff und dem Hauptkraftstoff definiert beeinflussenden Querschnitt aufweist.

13. Kraftstoffversorgungssystem zur Versorgung einer Gasturbinenanordnung, insbesondere eines Flugzeugs, mit Kraftstoff, umfassend eine Ventileinheit (100) nach einem der vorhergehenden Ansprüche, wobei der weitere Auslass (24) über eine Verbindungsleitung stromabseitig mit einer von dem ersten Auslass (8) zur Hauptstufe führenden Anschlussleitung in Strömungsverbindung gebracht ist, und wobei
eine einzelne Ventileinheit (100) zur Versorgung einer oder mehrerer Hauptstufen und/oder einer oder mehrerer Pilotstufen mit Kraftstoff ausgebildet ist, wobei stromab der Ventileinheit (100) in einer Hauptleitung (50) und/oder in einer Pilotleitung (60), ggf. jeweils, ein Zweigabschnitt (14) angeordnet ist.

14. Gasturbinenanordnung mit einer Brennkammeranordnung und einem Kraftstoffversorgungssystem umfassend zumindest eine Ventileinheit (100) nach einem der Ansprüche 1 bis 12 und eine Turbinenanordnung.

15. Verfahren zum Betreiben eines Kraftstoffversorgungssystems einer Gasturbinenanordnung, insbesondere eines Flugzeugs, bei dem eine Ventileinheit (100) nach einem der Ansprüche 1 bis 12 verwendet wird.
